(19) **Europäisches Patentamt / European Patent Office / Office européen des brevets**

(11) **EP 3 362 818 B1**

(12) **EUROPEAN PATENT SPECIFICATION**

(45) Date of publication and mention
of the grant of the patent:
**03.08.2022 Bulletin 2022/31**

(51) International Patent Classification (IPC):
**G01S 19/24** (2010.01)  **G01S 19/29** (2010.01)
**G01S 19/30** (2010.01)

(21) Application number: **16855951.6**

(22) Date of filing: **30.09.2016**

(52) Cooperative Patent Classification (CPC):
**G01S 19/30; G01S 19/24; G01S 19/29**

(86) International application number:
**PCT/US2016/054654**

(87) International publication number:
**WO 2017/065998 (20.04.2017 Gazette 2017/16)**

(54) **SATELLITE NAVIGATION RECEIVER WITH FIXED POINT SIGMA RHO FILTER**

SATELLITENNAVIGATIONSEMPFÄNGER MIT FIXPUNKT-SIGMA-RHO-FILTER

RÉCEPTEUR DE NAVIGATION PAR SATELLITE AVEC FILTRE RHO SIGMA À VIRGULE FIXE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.10.2015 US 201514880852
12.10.2015 US 201562240310 P**

(43) Date of publication of application:
**22.08.2018 Bulletin 2018/34**

(73) Proprietor: **Deere & Company
Moline, IL 61265 (US)**

(72) Inventors:
• **YU, Wei
Torrance, CA 90503 (US)**
• **KEEGAN, Richard, G.
Torrance, CA 90503 (US)**
• **HATCH, Ronald R.
Wilmington, CA 90744 (US)**

(74) Representative: **Millburn, Julie Elizabeth et al
Reddie & Grose LLP
The White Chapel Building
10 Whitechapel High Street
London E1 8QS (GB)**

(56) References cited:
**US-A1- 2002 047 799    US-A1- 2005 147 191
US-A1- 2006 015 250    US-A1- 2010 211 316
US-A1- 2012 326 922**

• **MEGAHED D ET AL: "Performance Evaluation of Combined L1/L5 Kalman Filter-Based Tracking versus Standalone L1/L5 Tracking in Challenging Environments", GNSS 2009 - PROCEEDINGS OF THE 22ND INTERNATIONAL TECHNICAL MEETING OF THE SATELLITE DIVISION OF THE INSTITUTE OF NAVIGATION (ION GNSS 2009), THE INSTITUTE OF NAVIGATION, 8551 RIXLEW LANE SUITE 360 MANASSAS, VA 20109, USA, 25 September 2009 (2009-09-25), pages 2591-2601, XP056010710,**
• **YIN HANG ET AL: "Implementation and Performance Analysis of a Multi-frequency GPS Signal Tracking Algorithm", GNSS 2014 - PROCEEDINGS OF THE 27TH INTERNATIONAL TECHNICAL MEETING OF THE SATELLITE DIVISION OF THE INSTITUTE OF NAVIGATION (ION GNSS+ 2014), THE INSTITUTE OF NAVIGATION, 8551 RIXLEW LANE SUITE 360 MANASSAS, VA 20109, USA, 12 September 2014 (2014-09-12), pages 2747-2753, XP056007796,**
• **GREWAL M S ET AL: "Kalman Filter Implementation With Improved Numerical Properties", IEEE TRANSACTIONS ON AUTOMATIC CONTROL, IEEE SERVICE CENTER, LOS ALAMITOS, CA, US, vol. 55, no. 9, 1 September 2010 (2010-09-01), pages 2058-2068, XP011302678, ISSN: 0018-9286**

- Mohinder S Grewal ET AL: "Chapter 7 - IMPLEMENTATION METHODS" In: "Kalman Filtering: Theory and Practice Using Matlab", 21 November 2014 (2014-11-21), John Wiley & Sons, XP055618401, ISBN: 978-1-118-85121-0 pages 281-366, DOI: 10.1002/9781118984987, * pages 330-346, section 7.6 SIGMARHO FILTERING *

**Description**

**TECHNICAL FIELD**

This application generally relates to a satellite navigation receiver with a fixed point sigma rho filter. In particular, this application relates to a multi-band satellite navigation receiver for carrier and code tracking using a fixed point sigma rho filter with improved stability.

**BACKGROUND**

Global navigation satellite systems (GNSS) utilize satellites to enable a receiver to determine position, velocity, and time with very high accuracy and precision using signals transmitted from the satellites. Such GNSS include the Global Positioning System (GPS), GLONASS, and Galileo. The signals transmitted from the satellites include one or more carrier signals at separate known frequencies, such as a first carrier (L1), a second carrier (L2), and an additional third carrier (L5) in the GPS. A code, such as a pseudo-random (PN) noise code modulated with information, may modulate a carrier of the signal, and may be unique to each satellite. Because the satellites have known orbital positions with respect to time, the signals can be used to estimate the relative position between an antenna of a receiver and each satellite, based on the propagation time of one or more signals received from three or more of the satellites. In particular, the receiver can synchronize a local replica of the carrier and code transmitted in a signal to estimate the relative position.

A typical receiver utilizes carrier tracking loops and code tracking loops for each satellite to measure the distance and velocity between the receiver and a particular satellite. The local replicas of the carrier and code can be generated by local signal generators that are driven by the carrier tracking loops and code tracking loops. In some receivers, extended Kalman filters (EKF) may be utilized to estimate the phase of the carrier and code through joint estimation. A conventional EKF can combine information from multiple frequencies to optimally estimate the distance and velocity between the receiver and a satellite. However, EKFs are not necessarily practical for use as aggregate predictive filters for carrier and code tracking due to the need to perform floating point calculations. For example, EKFs can have demanding or excessive computational requirements associated with minimizing the mean square error for data parameters with typical dynamic ranges associated with signal processing in satellite navigation receivers. In addition, EKF filters for signal processing may require the computation of inverse matrices with the complexity of $O(n^3)$, where $n$ is the dimension of the matrices. This fast iteration requirement prevents EKFs with complicated matrices calculations from using real-time signal processing.

One alternative representation of an EKF is a sigma rho filter. A sigma rho filter may also be utilized in some receivers to estimate the phase of the carrier and code. Sigma rho filters can use a standard deviation term (e.g., sigma parameter) and a cross correlation term (e.g., rho parameter), instead of a covariance matrix as in a typical EKF. The use of a standard deviation term can reduce the numerical range, and result in the saving of logic gates and/or the lowering of requirements for the widths of registers. The use of a cross correlation term naturally guarantees the symmetric property of the covariance matrix, in contrast to a typical EKF which uses a covariance matrix that requires an additional symmetric check. However, sigma rho filters using floating point calculations may be difficult to implement using digital circuits and may have issues with reliability and stability without special treatment, such as the possibility that the cross correlation term may not be properly bounded during the dynamic propagation and/or the measurement update of the sigma rho filter.

Accordingly, there is an opportunity for a satellite navigation receiver that addresses these concerns. More particularly, there is an opportunity for a satellite navigation receiver that simplifies and speeds up the data processing in a stable multi-band predictive filter for carrier tracking and code tracking to adaptively accommodate common information from aggregate bands and obtain the accurate position of a receiver in real time.

Performance evaluation of combined L1 L5 Kalman Filter-Based Tracking of MEGAHED et al compares separate and combined Kalman filters in environments suffering urban canyon multipath, moderate ionospheric errors and typical vehicle motion. The comparison criteria include the tracking loop lock indicators (phase and frequency) of both the L1 and L5 signals. In addition, the Kalman filters state estimates and standard deviations are analyzed to confirm the quality of tracking. Implementation and Performance Analysis of a Multi-Frequency GPS Signal Tracking Algorithm of YIN HANG et al presents an adaptive algorithm to synergistically utilize energies from one or more frequencies to aid the tracking of other signals under stress.

**SUMMARY**

The invention is defined in the independent claims, to which reference should be made. Preferable features of the invention are set out in the dependent claims. Code and carrier phase observations at multiple frequencies can measure a common distance (i.e., the distance from a specific satellite to the antenna of the receiver). Accordingly, the aggregate predictive filter combines the redundant measurements at multiple frequencies to jointly track the multiple satellite signals at various frequencies. The description herein illustrates the design of a fixed-point sigma rho filter and theoretically analyzes the stability issue of the sigma rho filter, which can lower computation load and simplify the digital implementation of the filter.

**BRIEF DESCRIPTION OF THE DRAWINGS**

FIG. 1 is a block diagram of a satellite navigation receiver, in accordance with some embodiments.

FIGs. 2A-2B are a schematic diagram of a satellite navigation receiver, in accordance with some embodiments.

FIGs. 3A-3B are a schematic diagram of baseband processing components of a satellite navigation receiver, in accordance with some embodiments.

FIG. 4 is a flowchart illustrating operations for processing a composite received signal for satellite navigation using a satellite navigation receiver, in accordance with some embodiments.

FIG. 5 is a flowchart illustrating operations for estimating the carrier corrective control data and the code corrective control data using a satellite navigation receiver, in accordance with some embodiments.

FIG. 6 is a flowchart illustrating operations for estimating the carrier corrective control data and the code corrective control data using a sigma rho filter in a satellite navigation receiver, in accordance with some embodiments.

FIG. 7 is a system diagram illustrating the operation of the sigma rho filter in a satellite navigation receiver, in accordance with some embodiments.

FIG. 8 is a diagram illustrating a two stage update of a system transition matrix, in accordance with some embodiments.

FIG. 9 is a system diagram illustrating the selection of an adaptive scale factor $\eta$ to bound the cross correlation coefficient within 1 at a dynamic propagation stage of the sigma rho filter, in accordance with some embodiments.

FIG. 10 is a system diagram illustrating a simplified determination of the adaptive scale factor $\eta$, in accordance with some embodiments.

FIG. 11 is a system diagram illustrating a method to control the range of a parameter $\beta$ which influences the standard deviation and cross correlation updates at the measurement update stage of the sigma rho filter, and the first solution of an adaptive selection of an adaptive scale factor $\mu$ to control the stability of the cross correlation update, in accordance with some embodiments.

FIG. 12 is a system diagram illustrating a second solution to select the adaptive scale factor $\mu$ for the stability of the cross correlation update at the measurement update stage of the sigma rho filter, in accordance with some embodiments.

FIG. 13 is a graph showing a solution to a convex optimal problem from which the first solution illustrated in FIG. 11 is derived.

**DETAILED DESCRIPTION**

The description that follows describes, illustrates and exemplifies one or more particular embodiments of the invention in accordance with its principles. This description is not provided to limit the invention to the embodiments described herein, but rather to explain and teach the principles of the invention in such a way to enable one of ordinary skill in the art to understand these principles and, with that understanding, be able to apply them to practice not only the embodiments described herein, but also other embodiments that may come to mind in accordance with these principles. The scope of the invention is intended to cover all such embodiments that may fall within the scope of the appended claims.

It should be noted that in the description and drawings, like or substantially similar elements may be labeled with the same reference numerals. However, sometimes these elements may be labeled with differing numbers, such as, for example, in cases where such labeling facilitates a more clear description. Additionally, the drawings set forth herein are not necessarily drawn to scale, and in some instances proportions may have been exaggerated to more clearly depict certain features. Such labeling and drawing practices do not necessarily implicate an underlying substantive purpose. As stated above, the specification is intended to be taken as a whole and interpreted in accordance with the principles of the invention as taught herein and understood to one of ordinary skill in the art.

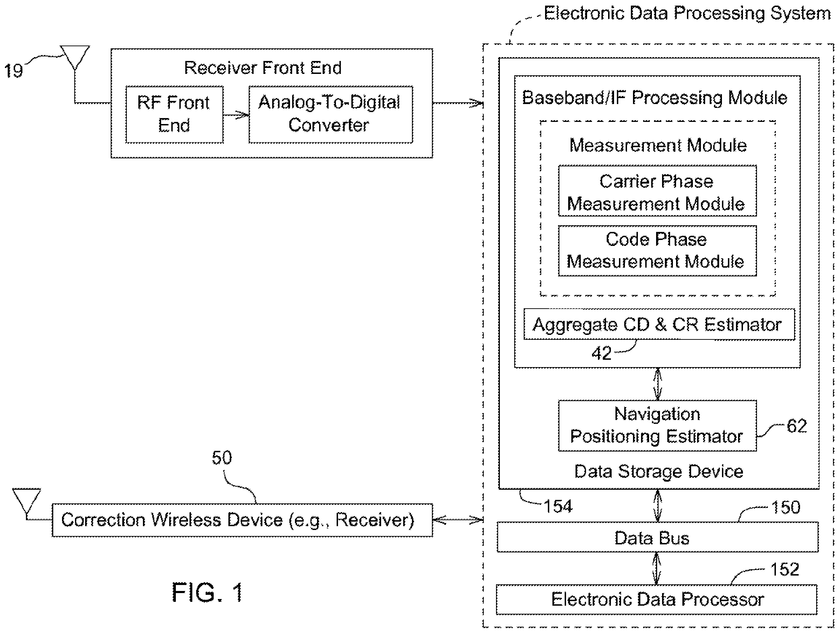

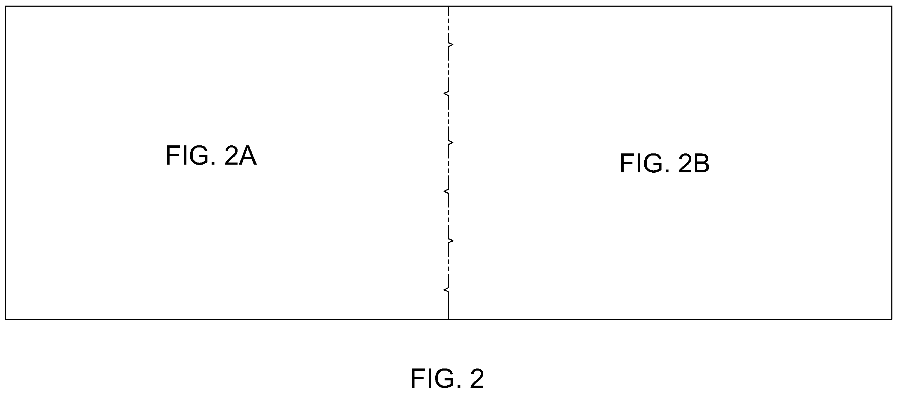

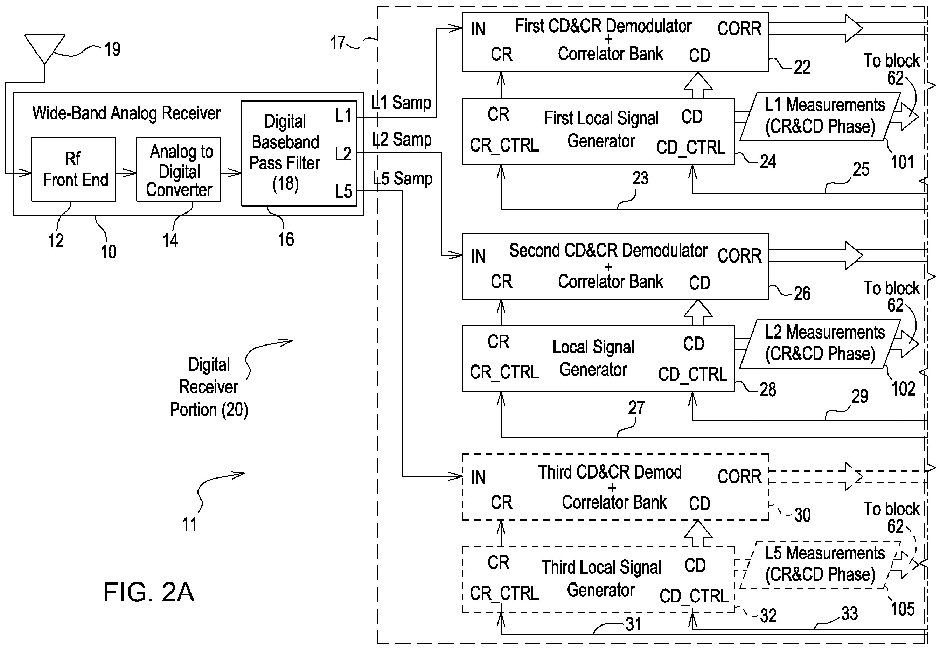

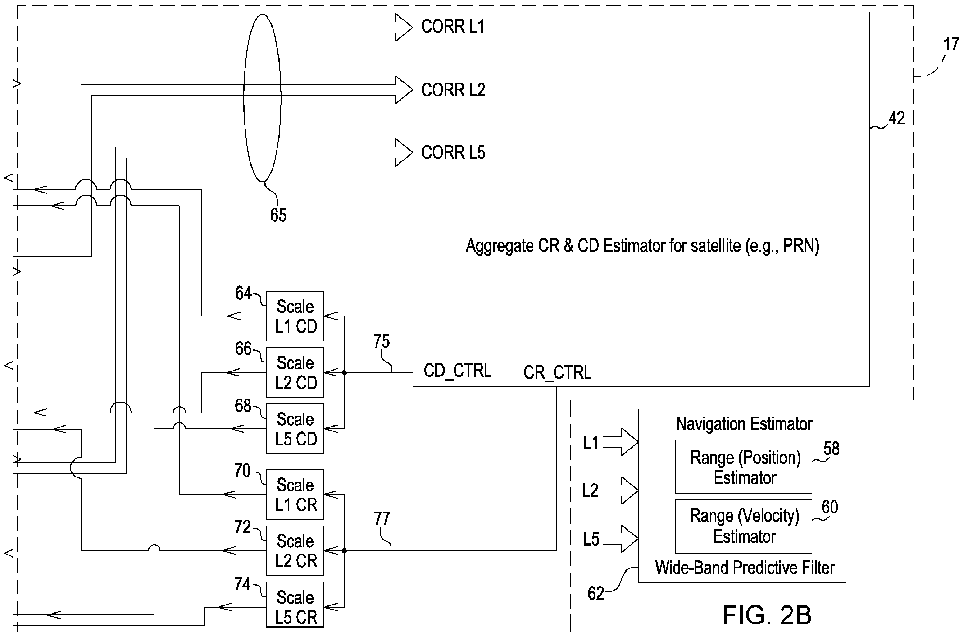

FIGs. 1, 2A-2B, and 3A-3B show a satellite navigation receiver 11 capable of receiving signals transmitted by satellites that include one or more carrier signals (e.g., a first carrier (L1), a second carrier (L2) and an additional third carrier (L5) of the Global Positioning System (GPS)) such that the receiver 11 can determine position, velocity, and time with very high accuracy and precision based on the received signals. The received signals may be transmitted from one or more satellites, such as a GPS satellite, a Galileo-compatible satellite, or a Global Navigation Satellite System (GLONASS) satellite. The satellites have known orbital positions versus time that can be used to estimate the relative position between an antenna 19 of the receiver 11 and each satellite, based on the propagation time of one or more received signals between three or more of the satellites and the antenna 19 of the receiver 11.

As used in this document, "CD" shall refer to code and "CR" shall refer to the carrier of the received signal or a digital representation of one or more samples of the received signal. The code may include a modulating code (e.g., PN code modulated with information) that modulates the carrier. In addition, "I" shall refer to an in-phase signal, whereas "Q" shall refer to a quadrature phase signal.

In embodiments, the receiver 11 described herein may comprise a computer-implemented system or method in which one or more data processors process, store, retrieve, and otherwise manipulate data via data buses and one or more data storage devices (e.g., accumulators or memory) as described in this document and the accompanying drawings. As used in this document, "configured to, adapted to, or arranged to" mean that the data processor or receiver 11 is programmed with suitable software instructions, software modules, executable code, data libraries, and/or requisite data to execute any referenced functions, mathematical operations, logical operations, calculations, determinations, processes, methods, algorithms, subroutines, or programs that are associated with one or more blocks set forth in FIGs. 1, 2A-2B, and 3A-3B and/or any other drawing in this disclosure. Alternately, separately from, or cumulatively with the above definition, "configured to, adapted to, or arranged to" can mean that the receiver 11 comprises one or more components described herein as software modules, equivalent electronic hardware modules, or both to execute any referenced functions, mathematical operations, calculations, determinations, processes, methods, algorithms, subroutine.

In any of the above referenced drawings of this document, any arrow or line that connects any blocks, components, modules, multiplexers, memory, data storage, accumulators, data processors, electronic components, oscillators, signal generators, or other electronic or software modules may comprise one or more of the following items: a physical path of electrical signals, a physical path of an electromagnetic signal, a logical path for data, one or more data buses, a circuit board trace, a transmission line; a link, call, communication, or data message between software modules, programs, data, or components; or transmission or reception of data messages, software instructions, modules, subroutines or components.

In some embodiments, a correction wireless device 50 (e.g., transceiver or receiver of satellite or cellular signals) is coupled to the receiver 11, such as to a navigation estimator 62. The correction wireless device 50 can receive correction data or differential correction data in the spatial, phase domain that is based on measured range data or carrier phase data from one or more local reference stations. For example, the correction data may incorporate or provide precise satellite orbit and clock corrections, rather than normal satellite broadcast information (ephemeris data or other demodulated data provided by demodulating the code (e.g., C/A or course acquisition code for GPS)), on one or more satellite signals to determine a relative position or absolute position of a mobile user satellite navigation receiver (e.g., a rover receiver). Although the resulting positions can be accurate within a few centimeters, conventional precise positioning can take a long convergence time of up to tens of minutes to determine the integer ambiguity or floating ambiguity value in the carrier phase of each satellite signal to achieve the advertised steady-state accuracy.

In some embodiments, the rover receiver may use code phase estimates to provide a rough estimate of the position or pseudo-range of the rover receiver with respect to one or more satellites that can be used to reduce the search space for convergence on the carrier phase solution and resolution of the carrier phase ambiguity. At the start of a convergence period on the integer ambiguity solution or floating ambiguity value, the estimated integer ambiguity may be subject to a high variance or error than is required for precise carrier phase navigation within a few centimeters of accuracy.

The receiver 11 may include an analog receiver portion 10 coupled to a digital receiver portion 20. The analog receiver portion 10 includes an antenna 19 and a radio frequency (RF) front end 12. The receiver 11 receives a signal that comprises a plurality of carrier signals from a satellite. The digital receiver portion 20 includes the portion of the receiver 11 that processes data after the analog-to-digital conversion of the received signal by an analog-to-digital converter (ADC) 14. For example, the digital receiver portion 20 can include an electronic data processor 152, a data storage device 154 (e.g., electronic memory), and a data bus 150 for communication between the electronic data processor 152 and the data storage device 154, where software instructions and data are stored in the data storage device 154 and executed by the data processor 152 to implement any of the blocks, components or modules (e.g., electronic modules, software modules, or both) illustrated in FIGs. 1, 2A-2B, and 3A-3B. The receiver 11 may be capable of: (a) determining a location of the antenna 19, (b) determining a range or distance between the antenna 19 and a satellite; and/or (c) determining ranges between the antenna 19 and one or more satellites.

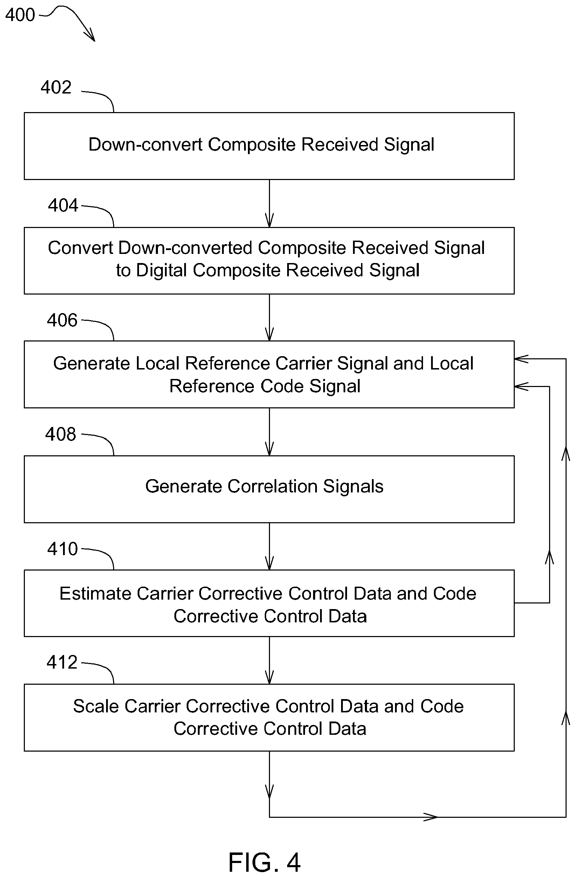

A process 400 using the receiver 11 that may receive and process a received signal from a satellite to estimate carrier corrective control data and code corrective control data is shown in FIG. 4. The RF front end 12 of the analog receiver portion 10 receives the signal(s) detected by the antenna 19 that have been transmitted from one or more satellites. In one embodiment, the RF front end 12 includes an amplifier, a down-conversion mixer, and a local oscillator (not shown). For example, the amplifier may be an RF or microwave amplifier (e.g., low noise amplifier) that is coupled to the antenna 19. The amplifier may provide an amplified signal to the down-conversion mixer as a first input. The local oscillator may provide a signal to the down-conversion mixer as a second input. The down-conversion mixer moves or lowers the signal spectrum of the received signal from RF to an intermediate frequency (IF) or a baseband frequency, such as at step 402 of the process 400 shown in FIG. 4. The down-conversion system may include one or more mixing, amplifying, and filtering stages, as in known in the art.

The output of the down-conversion mixer in the RF front end 12 is coupled to the ADC 14. The ADC 14 converts the analog intermediate frequency signal or analog baseband signal to a digital signal, such as at step 404 of the process 400. The digital signal may include one or more digital samples that are available at a sampling rate. Each sample may have a finite quantization level and each sample may be capable of being processed by an electronic data processing system, e.g., the digital receiver portion 20 of the receiver 11.

In some embodiments, the output of the analog receiver portion 10 may be coupled to an optional digital interface 16. The digital interface 16 may include buffer memory (not shown) that can temporarily store the output of the ADC 14 for processing by the digital receiver portion 20. The digital interface 16 may also include a digital filter that filters one or more down-converted carrier signals. For example, the digital filter may be a band-pass filter 18 that provides a filtered L1 carrier signal, a filtered L2 carrier signal, and a optional filtered L5 carrier signal.

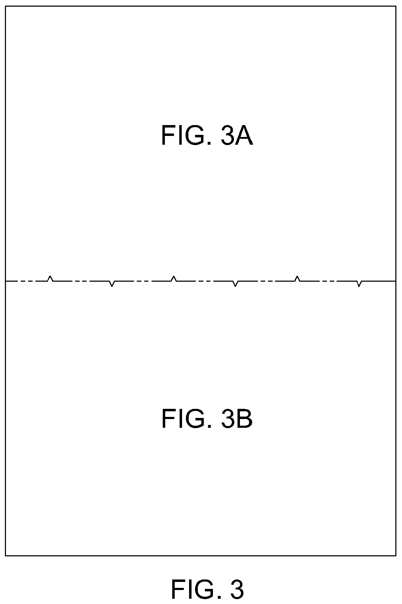

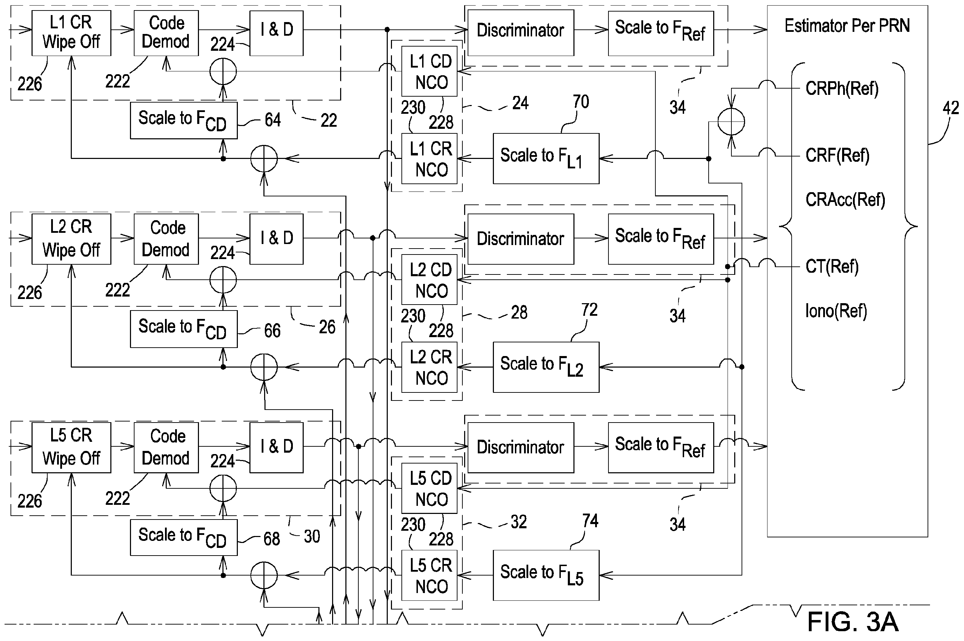

The digital signal output by the ADC 14 or the filtered carrier signals output from the band-pass filter 18 is input into the digital receiver portion 20 of the receiver 11, and in particular to a baseband module 17. The digital signal or filtered carrier signals may be received by a first CD/CR correlation module 22, a second CD/CR correlation module 26, and a third CD/CR correlation module 30, respectively. Each CD/CR correlation module 22, 26, 30 may include a carrier wipe-off module 226, a bank of local code replica with various phase shifts with respect to the input signal, and a bank of corresponding integrate and dump (I & D) modules 224, as shown in FIG. 3A. In one embodiment, the carrier wipe-off module 226 can convert the digital samples of the digital signal to an exact baseband digital signal representation by removing the residual CR frequency. Each CD/CR correlation module 22, 26, 30 can be associated with a different carrier frequency or frequency range for the received satellite signal, such as the first carrier frequency (e.g., LI), the second carrier frequency (e.g., L2), and the optional third carrier frequency (e.g., L5).

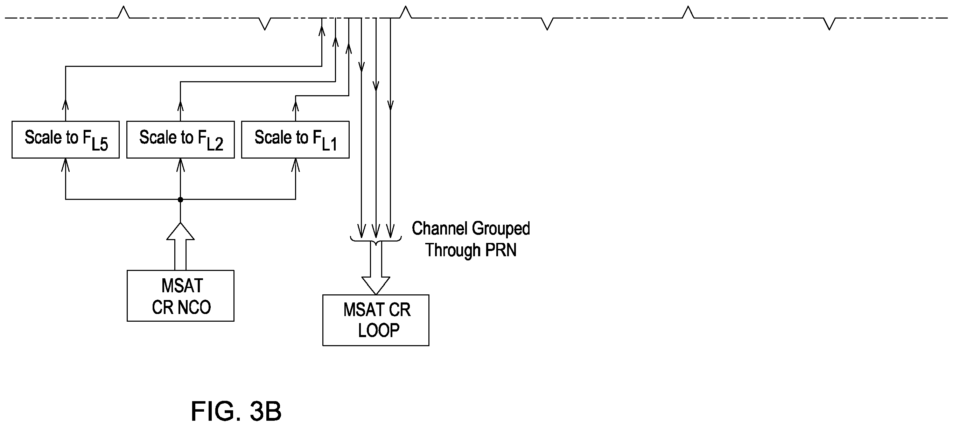

Local signal generators 24, 28, 32 (e.g., including numerically controlled oscillator (NCO) modules 228, 230 for each carrier frequency, as shown in FIG. 3) provide a local estimation of CR phase and CD phase for each digital sample, such as at step 406 of the process 400, which is used to remove the residual CR frequency and phase and residual CD phase in the sample. In one embodiment, the carrier wipe-off module 226 outputs I and Q components of the digital signal for input into the bank of correlators that consists of a bank of code demodulators 222 and corresponding I & D modules 224 within each of the CD/CR correlation modules 22, 26, 30. The local signal generators 24, 28, 32 is adapted to generate local reference carrier and code signals that include the CR phase and CD phase for each digital sample. Each local signal generator 24, 28, 32 is associated with a set of different carrier and code signals within the digital composite received signal. The local signal generators 24, 28, 32 generate the local reference carrier and code signals based on carrier corrective control data and code corrective control data from an aggregate predictive filter 42. The aggregate predictive filter 42 may be driven by a sigma rho filtering algorithm, as described below.

Within each CD/CR correlation module 22, 26, 30, an output of the carrier wipe-off module 226 may be fed into a bank of correlators. In one embodiment, the bank of correlators consists of a bank of the code demodulator 222 and a corresponding I & D module 224. The bank of code demodulators 222 may generate multiple codes with various phase shifts against the input signal.

In one embodiment, the bank of correlators has multiple outputs that are used to synchronize the local CD phase, CR frequency, and CR phase estimation with the received samples. For example, each correlator may include one or more of the following modules: one or more CR wipe-off portions, a bank of CD wipe-off modules and corresponding I & D modules, and/or one or more multipliers or mixers.

As used in this document, a module may comprise hardware and/or software. In one embodiment, each correlator can maximize a correlation between the received signal with a locally generated code by synchronizing the locally generated CD phase with the CD phase in digital sample or digital signal. Further, multiple locally generated CD signals (e.g., early (E), prompt (P), and late (L) CD signals) may be used to form a corresponding CD misalignment signal using various discriminator functions.

Each local signal generator 24, 28, 32 may include a separate code signal generator and a carrier signal generator, for example. Each code signal generator 228 may generate a locally generated replica of a pseudo random noise code, a pseudo noise (PN) code sequence, or the like. The code signal generator 228 may be associated with a shift register or another device to provide multiple outputs that are offset in time or phase with respect to each other. For example, the code signal generator 228 may have an early output (E), a prompt output (P), and a late output (L) that are provided to the set of correlators. The early output may provide an early PN code that is advanced against the current estimated code phase by a known time period (e.g., one half chip); the prompt output may provide a prompt PN code that reflects the current estimated code phase; and the late output may provide a late PN code that is delayed in time with respect to the prompt PN code by a known time period (e.g., one half chip). If correlations are available between the received signal and the early, prompt, and late variants of the locally generated replica of the received signal, the receiver 11 may adjust the phase and time delay (e.g., via shift registers) of the locally generated replica in an attempt to maximize correlation, for example.

In one embodiment, the code signal generator 228 may include any generator for generating a spread spectrum code, spread spectrum sequence, binary sequences, Gold codes, a PN code, a pseudo-random noise code sequence; a PN code that is similar to a spread spectrum code, spread spectrum sequence, binary sequences, Gold codes, pseudo-random noise code, pseudo-random noise code sequence; or a PN code transmitted by a transmitter of a satellite for reception by the receiver 11 as the composite received signal. In another embodiment, the code signal generator 228 may include a series of shift registers that are loaded with an initial starting code sequence. The shift registers may have various selectable or controllable taps for providing feedback and reiterative values as the output. In one embodiment, three versions (E, P, L) of a PN code from the code signal generator 228 can interact with the two versions (I, Q) of the received signals of each carrier to produce various permutations of local replica signals to generate different correlations through the integration-and-dump module 224. A bank of correlations, which is outputted by the correlators, may be used for decoding, demodulating, and CD and CR phase tracking.

The CD/CR correlation modules 22, 26, 30 generate multi-frequency correlations (e.g., CORR L1, CORR L2, and CORR L5) for each satellite, such as at step 408 of the process 400. The correlation products at each frequency may measure the single distance between a specific satellite and the receiver 11. Therefore, the range measurements at each frequency can contain redundant information. Due to frequency-selective effects, such as the influence of the ionosphere, the correlation range measurements at one frequency may be slightly different from the correlation range measurements at another frequency. The correlations may be output from the CD/CR correlation modules 22, 26, 30 over a data bus 65, for example, and be processed by an aggregate predictive filter 42 that is adapted to estimate and provide carrier corrective control data and code corrective control data (labeled as outputs CR_CTRL and CD_CTRL, respectively), such as at step 410 of the process 400. As shown in processes 400 and 500, the carrier corrective control data and code corrective control data from the aggregate predictive filter 42 consists of a frequency-independent part and a frequency-selective part. The frequency-independent control data is provided at a reference frequency, which is scaled to each individual frequency through a scale module as 64, 66, 68, 70, 72, 74. The frequency-selective part is estimated individually at each frequency to account for effects such as ionospheric divergence. The scaled carrier corrective control data and scaled code corrective control data is provided as feedback to the local signal generators 24, 28, 32 for use at step 406. The carrier corrective control data and the code corrective control data may include, for example, an estimated code phase, an estimated carrier phase at a reference frequency, a Doppler shift, a rate of change of the Doppler shift, a strength of the plurality of carrier signals, and/or an amplitude of the plurality of carrier signal.

Since the aggregate predictive filter 42 utilizes every available correlation, the common component embedded in the correlation provides the redundancy. Such redundancy can improve performance of the receiver 11 in a frequency-selective fading environment, i.e., the aggregate predictive filter 42 can use correlations on the frequency with the least impact to update the signal generators 24, 28, 32 regardless of the quality of their own correlations. The receiver 11 having the fixed point aggregate predictive filter 42 described herein is therefore well-suited to provide reliable position, range, and velocity estimates in the presence of frequency-selective interference and/or fading or low signal strength of the satellite signals.

The aggregate predictive filter 42 may include a fixed point sigma rho filter that is based on a modified extended Kalman filter. The aggregate predictive filter 42 may utilize a standard deviation term (sigma parameter) and a cross correlation term (rho parameter) to improve the numerical stability of the filter. This is in contrast to a typical extended Kalman filter that uses a covariance matrix. The numerical range of computations of the parameters of the aggregate predictive filter 42 may accordingly be reduced by a factor of a square root.

The aggregate predictive filter 42, the local signal generators 24, 28, 32, and the frequency scaling modules 64, 66, 68, 70, 72, 74 may form carrier tracking modules and code tracking modules or a joint tracking module as the aggregate predictive filter 42. The carrier tracking modules and the code tracking modules may collectively be referred to as the tracking module. The tracking module can support the measurement of the CR frequency, CR phase, and CD phase (individually or collectively) of the received signals to control one or more locally generated reference signals with respect to corresponding received signals (derived from the composite received signal) such that the correlation of the corresponding received signals to the respective locally generated reference signals is maximized. In one embodiment, the receiver 11 may receive four received signals from at least four different satellite transmitters to estimate the position (e.g., in three spatial dimensions) of the antenna 19. For example, the individual code and carrier tracking module or the joint tracking module can generate measurement data that the receiver 11 uses to control an adjustable time delay (e.g., routing data through known number or sequence of shift registers), and/or engage in other data processing of one or more digital signals associated with a locally generated reference signal with respect to the received signal to maximize the correlation of each received signal to the corresponding locally generated reference signal.

In certain embodiments, the multi-frequency correlations resulting from CD/CR correlation modules 22, 26, 30 are processed by the aggregate predictive filter 42. In embodiments, the aggregate predictive filter 42 can be realized using a sigma rho filtering algorithm and may include a carrier phase error detector, a frequency error detector, and a code error detector. The aggregate predictive filter 42 functions as a multi-frequency joint code and carrier tracking filter that replaces the multiple tracing loops in a conventional receiver that includes a code loop, a carrier frequency loop, and a carrier phase loop.

A carrier tracking component of the aggregate predictive filter 42 may facilitate the alignment of the phase of the locally generated replica of the CR to the received signal. Carrier control data 77 to the local signal generators 24, 28, 32 adjusts the locally generated replica signal of the CR produced by the carrier NCO module 230. In one embodiment, the carrier NCO module 230 may provide a locally generated replica of the carrier to the carrier wipe-off module 226. The carrier NCO module 230 may receive a carrier phase correction signal and output an adjusted clock signal or another control signal for generating the locally generated CR frequency that accurately aligns with the CR phase or the residual carrier phase of the received sample.

The code tracking component of the aggregate predictive filter 42 may facilitate the alignment of the phase of the locally generated PN replica with respect to the received sample. The code tracking component provides control data 75 to adjust the local signal generators 24, 28, 32, where the code NCO module 228 can control the chipping rate of the local signal generator 24, 28, 32. The code tracking module, which conventionally comprises a delay locked loop (DLL), may generate a control signal to tune the chipping rate of code NCO module 228. The CD phase (i.e., the output of code NCO module 228) may be used to drive the local signal generator 24, 28, 32. Multiple local PN sequences may be generated by the local signal generator 24, 28, 32. The local PN waveform can advance, synchronize, or delay its phase against the CD phase of the received sample.

In one embodiment, a local signal generator may drive a carrier measurement module and a code measurement module. The carrier measurement module may include a CR phase counter which may count both the number of integer cycles plus the fractional cycles of the received CR during a known time period. The code measurement module may include a millisecond counter, a chip counter, and a fractional chip counter, where the combination of those counters may provide the pseudo range measurement.

Within each CD/CR correlation module 22, 26, 30, a data demodulator 222 may provide satellite navigation data for estimating a range (e.g., distance between a satellite and the antenna 19) or a position (e.g., in two or three dimensional coordinates) of the phase center of the antenna 19. The satellite navigation data or other signal information may include one or more of the following information that modulates the baseband waveform of the received signal: date, satellite navigation system time, satellite status, orbital data, ephemeris data, almanac, satellite location, and/or satellite identifier. The data demodulator 222 may use phase shift keying, phase demodulation, pulse width demodulation, amplitude demodulation, quadrature amplitude demodulation, or another demodulation technique that is consistent with the modulation by the modulator at the satellite transmitter.

In one embodiment, the data demodulator 222 can output a demodulated signal or demodulated encoded data, such as a demodulated digital signal with a quadrature phase component and an in-phase component at baseband. The data may include one or more following information such as date, satellite navigation system time, satellite status, orbital data, ephemeris data, almanac, satellite location, and/or satellite identifier.

In one embodiment, the measurement generation module 101, 102, 105 or the local signal generators 24, 28, 32 may estimate the propagation time between transmission of a satellite signal from a certain satellite to the antenna 19. The navigation estimator 62 may convert the propagation time into a distance or range proportional to the speed of light, using a position estimator 58 and/or velocity estimator 60. The navigation estimator 62 may also determine a range, pseudo-range, or estimated range between the antenna 19 and four or more satellites with a reliable signal quality or signal strength based upon one or more of the following: (a) the measured CD phase of each received signal, and/or (b) the measured CR phase of each received signal. In one embodiment, the navigation estimator 62 or digital receiver portion 20 may resolve ambiguities in the measured CR phase of the received signal by searching for a solution that is consistent with one or more of the following: (1) a position estimated from decoding the code portion of the signal, (2) a known reference position of the antenna 19, and/or (3) differential correction data applicable to the received signal. Furthermore, the navigation estimator 62 may be associated with a wireless receiver (e.g., satellite receiver, mobile transceiver, or cellular transceiver) that receives navigation correction data from a reference satellite navigation receiver to reduce or eliminate sources of bias or error (e.g., certain clock errors or propagation errors) in the CR phase measurements.

The navigation estimator 62 can determine the position estimate of the antenna 19 based on the measured CR phases, estimated ranges, and demodulated data. For example, the navigation estimator 62 may use ranges from four or more satellites to determine the position, velocity, or acceleration of the antenna 19 of the receiver 11 in two or three dimensions.

In the digital receiver portion 20, the receiver 11 may include hardware and/or software instructions. For example, in one illustrative embodiment, the hardware may include a data processor that communicates to a data storage device, which stores software instructions, via one or more data buses. In the digital receiver portion 20, as used throughout the document, the data processor may include one or more of the following: an electronic data processor, a microprocessor, a microcontroller, an application specific integrated circuit (ASIC), digital signal processor (DSP), a programmable logic device, an arithmetic logic unit, or another electronic data processing device. In the digital receiver portion 20, the data storage device may comprise electronic memory, registers, shift registers, volatile electronic memory, a magnetic storage device, an optical storage device, or any other device for storing data. The data processor may be coupled to the data storage device via one or more data buses, which support communication between the data processor and the data storage device. As used herein the data processor may refer to one or more components or modules of the digital receiver portion 20, including but not limited to any of the following: the carrier wipe-off module 226, the code wipe-off module, the integration-and-dump module 224, the bank of correlators, the local signal generators 24, 28, 32, code tracking module, carrier tracking module, measurement generation module 101, 102, 105, data demodulator 222, and navigation estimator 62.

In general, the digital receiver portion 20 may include a computer or an electronic data processing system that includes an electronic data processor, digital logic circuits, multiplexers, multipliers, digital filters, integrators, delay circuits, oscillator, signal generator, PN code sequence generators, registers, shift registers, logic gates, and/or other hardware. The electronic data processing system may support storage, retrieval and execution of software instructions stored in a data storage device.

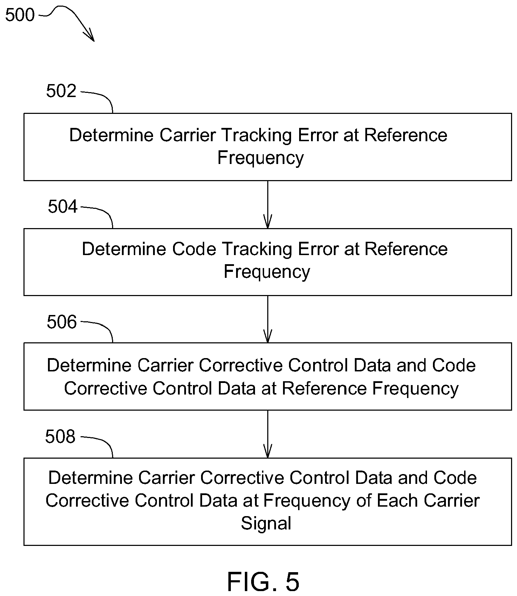

In one embodiment, the aggregate predictive filter 42 may utilize a process 500 shown in FIG. 5 to estimate the carrier corrective control data and the code corrective control data. The process 500 is an embodiment of step 410 of the process 400 described above. At step 502, a carrier tracking error is determined at a reference frequency from the plurality of correlations received by the aggregate predictive filter 42 from the CD/CR correlation modules 22, 26, 30. The carrier tracking error is determined by a carrier loop discriminator. A code tracking error is determined at the reference frequency, such as at step 504, from the plurality of correlations. The code tracking error is determined by a code loop discriminator.

The carrier tracking error and the code tracking error is utilized by a joint estimator to estimate the carrier corrective control data and the code corrective control data. In particular, at step 506, the carrier corrective control data and the code corrective control data are determined at the reference frequency, based on the carrier tracking error and the code tracking error from steps 502 and 504. The carrier corrective control data and the code corrective control data are estimated at a frequency of each of the carrier signals, such as at step 508, based on the carrier tracking error and code tracking error from steps 502 and 504. The carrier corrective control data and the code corrective control data at the reference frequency and at the frequency of each of the carrier signals are provided for use at step 406 of the process 400 by the local signal generators 24, 28, 32.

**[I. Sigma Rho Filter - Mathematical and Figure Notation]**

The following description uses a notation system that includes using $n$ as the sampling epoch; $i$, $j$, and $k$ as the index of either the row or column of an element in a matrix or a vector; $N$ as the number of an element in a state vector; $x$ as a state vector; and

$$\check{x}$$

as a normalized state vector. In addition, a symmetric truncation (i.e., a symmetric right shift) calculation is defined as

$$x_k^p >> u := ROUND\left(\frac{x_k^p}{2^u}\right)$$ , where $x_k^p$ is a fixed point representation of a floating point variable $x_k$ that has p-bit extra precision, where $k = 0, 1, ..., N-1$, and is converted according to the equation $x_k^p = ROUND\left(x_k 2^p\right)$ .

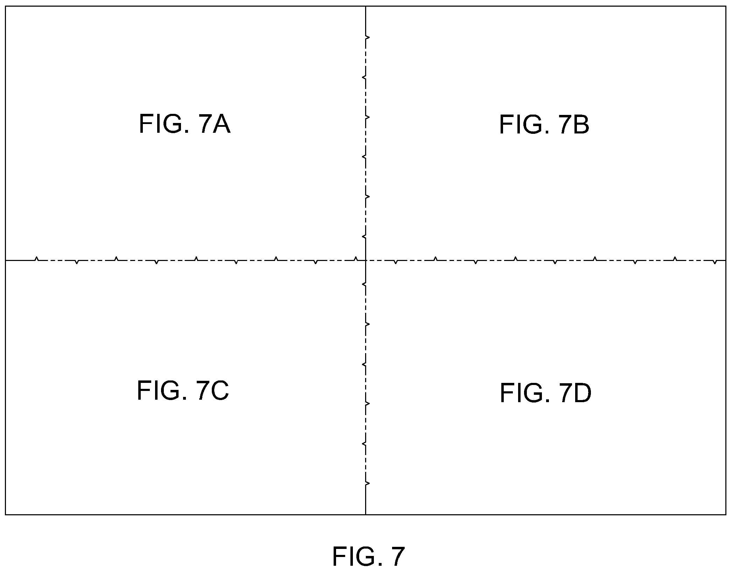

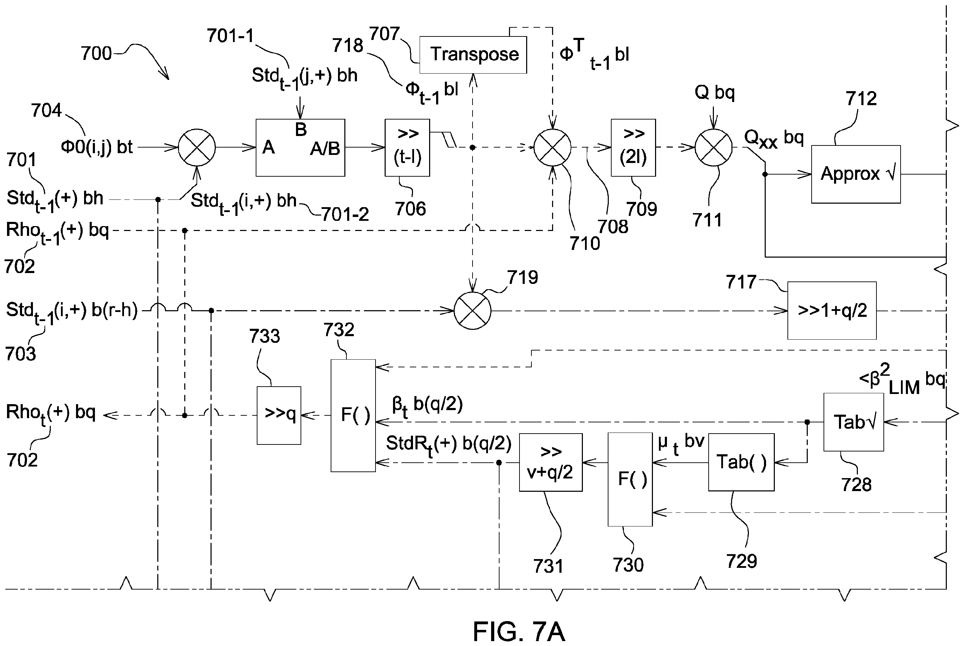

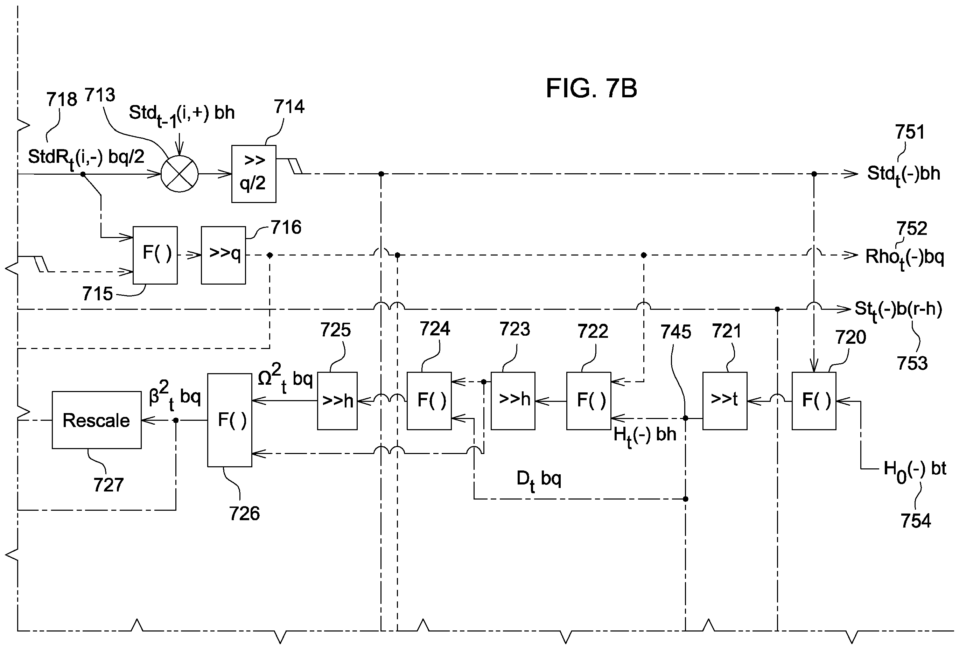

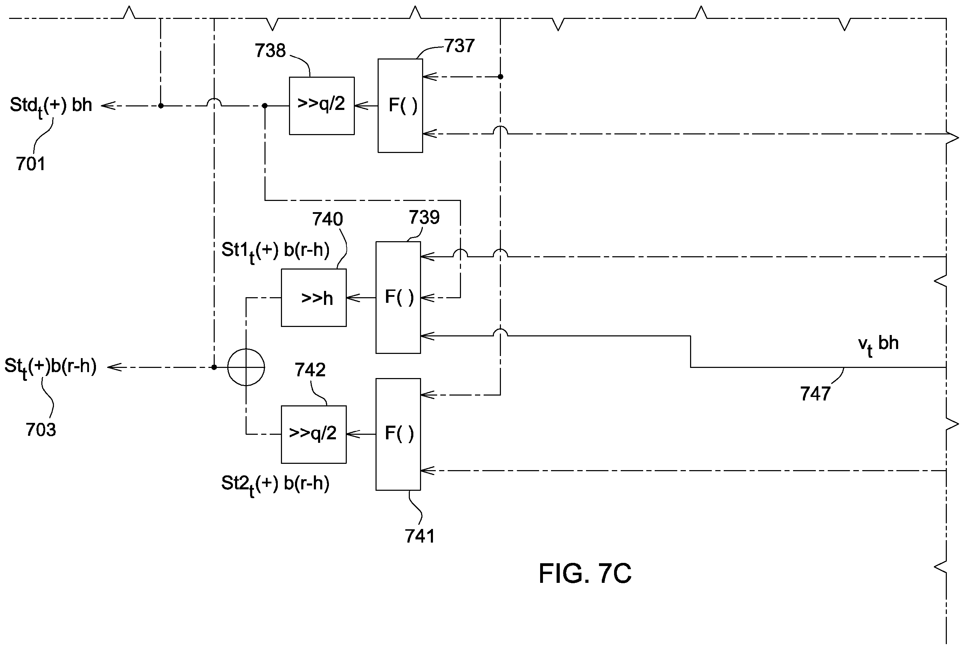

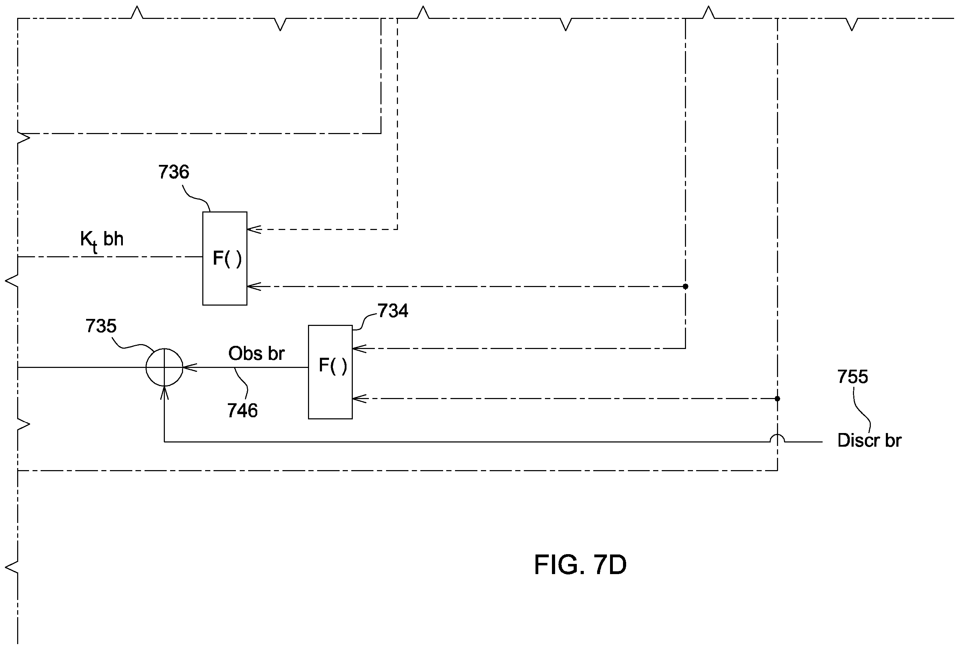

A fixed point sigma rho filter can be modeled by a set of notation of the extra bit to each variable. For example, equation (2) illustrates that p-bit precision is applied on the variable or vector $x_k$. The bit of precision can be represented by g, p, s, t, h, q, 1, v, and r. Accordingly, each variable at FIG. 7 is also noted with the precision bits, for example "bt" indicates the corresponding variable has a precision of t bits. To simplify the operation module of FIG. 7, a universal function symbol "F( )" has been adopted to represent various functions, e.g., modules 715, 720, 722, 724, 726, 730, 732, 734, 737, 739 and 741 may represent identical or different mathematical computations. Each of the modules will be modeled through mathematical equations in the following sections.

The cyclic process 700 in FIG. 7 is driven by a pair of propagations named the dynamic propagation and the measurement update, similar to a conventional Kalman filter. The aggregate predictive filter 42 may propagate a triplet (

$$\dot{x},$$

$\rho$, $\sigma$), which represents a normalized state 701, correlation coefficients 702, and a standard deviation 703, respectively. In particular, the normalized state 701 is a standard deviation vector to the state vector 703; the correlation coefficients 702 are a symmetric matrix denoting the correlation between any of the two states in the normalized state 701; and the standard deviation 703 is a state vector. The following sections utilize FIG. 7 to describe the cyclic propagation of the aggregate predictive filter 42.

Before starting the dynamic propagation stage, the parameters of the sigma rho filter can be configured with initial conditions resulting from the signal detection part. For example, $\Phi_B^t$ 704 denotes the constant base transition matrix with t bit precision, $\sigma^{+,h}$ 701 with precision of $h$ bit may be initialized with the default standard deviation to the normalized state $x^{+,s-h}$ which has a precision of $s$-$h$ bits. The normalized state $x^{+,s-h}$ may be initialized according to the output from the coarse estimation stage, e.g., the signal detection stage. Additionally, since there are two propagations to drive the aggregate predictive filter 42, any parameter with a superscript "-" indicates the resultant value from the dynamic propagation, and any parameter with a superscript "+" indicates the result of the measurement update.

It should also be noted that in FIGs. 7-12, the lines connecting the various modules represent different types of calculations. In particular, a dashed line represents a matrix-based calculation, a dotted line represents a vector-based calculation, and a solid line represents a scalar-based operation.

**[II. Standard Deviation, Cross Correlation, & State Update in Dynamic Propagation Stage]**

**[A. Calculation of Initial System Transition Matrix]**

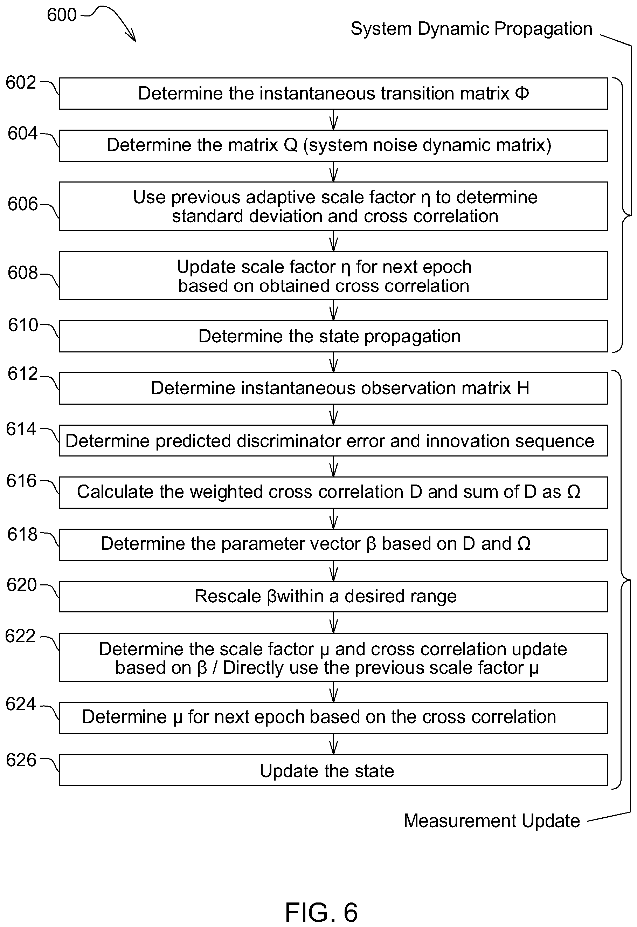

The cyclic propagation starts with the dynamic propagation, where the initial system transition matrix $\Phi_B^t$ with $t$ bit precision may be updated with the latest standard deviation of one state 701-1 and the standard deviation of another state 701-2. The selection of the states 701-1 and 701-2 can depend on the row and column of the element in the initial system transition matrix $\Phi_B^t$, which is scaled by ($t$-$l$) to obtain the instant transition matrix of $\Phi_n^l$ at epoch $n$ with $l$ bit precision, such as at step 602 in the process 600 shown in FIG. 6, which is modeled by:

$$\Phi_{ij,n}^l = \Phi_{B,ij}^t \frac{\sigma_j^h}{\sigma_i^h} >> (t-l) \quad (1).$$

**[B. Definition of Q matrix]**

The updated transition matrix $\Phi_n^l$ may be combined with the correlation coefficients matrix 702 using the multiplier 710. The temporary result 708 has a precision of $2l+q$ bits. Therefore, a scale unit 709 can be applied to adjust the result with $q$ bit precision. An adder 711 may combine the output from the scale unit 709 and the constant system noise matrix $Q^q$ to form the instant system noise matrix, such as at step 604 of the process 600, according to:

$$Q_{xx,n+1}^{-,q} = \left( \Phi_n^l \rho_n^{+,q} \Phi_n^{l\,T} >> 2l \right) + Q^q \quad (2),$$

where

$Q_{xx,n+1}^{-,q}$ denotes the system noise matrix at epoch n, and

$\rho_n^{+,q}$ is the correlation coefficient matrix with $q$ bit precision at epoch $n$ after measurement update.

In equation (2), three matrices are multiplied before a symmetric truncation of $2l$ bits. The precision of the

normalized transition matrix $\Phi_n^l$ and the cross-correlation function $\rho_n^{+,q}$ may be limited due to the result of having $2l + q$ bits for the matrix $Q_{xx,n+1}^{-,q}$. To economize the number of logic gates in a digital circuit design, it may be desirable in some embodiments to use a two stage truncation to calculate the matrix $Q_{xx,n+1}^{-,q}$ according to:

$$Q_{xx,n+1}^{-,q} = \left(\left(\Phi_n^l \rho_n^q >> s\right)\Phi_n^{l\,T} >> (2l - s)\right) + Q^q \quad (3),$$

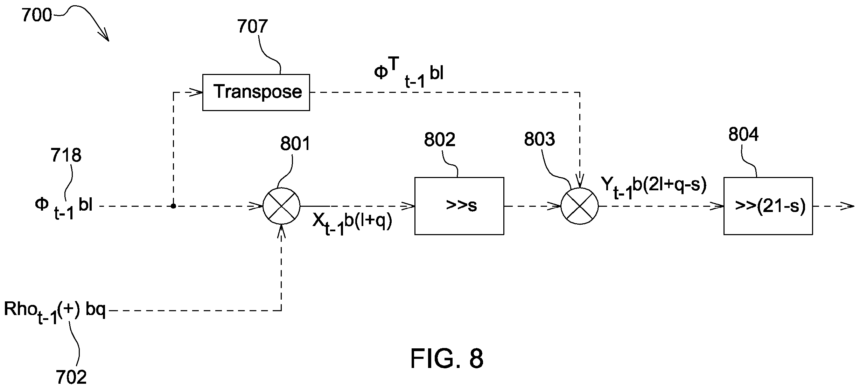

where, as shown in FIG. 8, the matrix 718 multiplies matrix 702 through a matrix multiplier 801. The middle result from the matrix multiplier 801 may be truncated by s bit to reduce the register size. The output of scale unit 802 may be multiplied with the output of transpose unit 707 to generate a second temporary result which is scaled by a scale unit 804 to obtain the updated transition matrix $\Phi_n^l$.

At step 606 of the process 600, a square root module 712 may approximately calculate the square root as

$$\alpha_i^{-,\frac{q}{2}} = \left(\frac{\sigma_i^{-,h}}{\sigma_i^{+,h}}\right)^{\frac{q}{2}}$$

$$= \sqrt{Q_{xx,n+1}^{-,q}} = \left(\eta^g >> g - \frac{q}{2}\right) + \eta^g Q_{xx,n+1}^{-,q} >> \left(g + \frac{q}{2}\right) \quad (4).$$

The variable g in equation (4) may be selected to be $\frac{q}{2}$ in some embodiments to simplify the calculation. The inverse of $\alpha_i^{-,\frac{q}{2}}$ can be defined by

$$\left(\frac{1}{\alpha_i^-}\right)^{\frac{q}{2}} = ROUND\left(\frac{2^q}{\alpha_i^{-,\frac{q}{2}}}\right) \quad (5).$$

**[C. Standard Deviation Update]**

The multiplier 713 may combine the scale factor $\alpha_i^{-\frac{q}{2}}$ of the matrix 718 (equation (4)) with the standard deviation $\sigma^+$ to obtain the obtain the standard deviation $\sigma^-$ at the dynamic propagation stage, which may be modeled as:

$$\sigma_i^{-,h} = \sigma_i^{+,h} \alpha_i^{-,\frac{q}{2}} >> \frac{q}{2} \quad (6).$$

Module 714 may produce a right shift of q/2 bits and normalize the resulting standard deviation to a precision of h bits.

**[D. Cross Correlation Update]**

The cross correlation update at the dynamic propagation stage may be calculated according to:

$$\rho_{ij,n+1}^{-,q} = \left(\frac{1}{\alpha_i^-}\right)^{\frac{q}{2}} \left(\frac{1}{\alpha_j^-}\right)^{\frac{q}{2}} Q_{xx,n+1}^{-,q} >> q \quad (7),$$

where $\left(\dfrac{1}{\alpha_i^-}\right)^{\frac{q}{2}}$, the inverse of the scale factor $\alpha_i^{-,\frac{q}{2}}$, is defined by equation (5). This function may be symbolized by a function module 715 in FIG. 7. A shift function 717 can scale the cross correlation term into a precision of q bits.

**[E. State Update]**

The state dynamic update $\overset{\scriptstyle(}{x}{}^-$ may be determined at the dynamic propagation stage and may be calculated at step 610 of the process 600, according the following equation:

$$\overset{\scriptstyle(}{x}{}_{n+1}^{-,r-h} = \Lambda^{-,\frac{q}{2}} \Phi_n^l \overset{\scriptstyle(}{x}{}_n^{+,r-h} >> \left(\frac{q}{2}+l\right) \quad (8),$$

where

$$\Lambda^{-,\frac{q}{2}} = diag\left(\left(\frac{1}{\alpha_0^-}\right)^{\frac{q}{2}}, \left(\frac{1}{\alpha_1^-}\right)^{\frac{q}{2}}, K, \left(\frac{1}{\alpha_{N-1}^-}\right)^{\frac{q}{2}}\right) \quad (9).$$

In equation (8), a multiplier 719 may combine the transition matrix $\Phi_n^l$ with the normalized state vector

$$\overset{\scriptstyle(}{x}{}^{+,(r-h)}$$

with the scale diagonal matrix of $\Lambda^{-,\frac{q}{2}}$ (equation (9)). The right shift module 717 may scale the resultant state vector

$$\overset{\scriptstyle(}{x}{}^{-,r-h}$$

to r-h bits.

**[F. First Solution to Ensure Stability of Cross Correlation Propagation]**

Prior to addressing the measurement update stage, the stability issue at the dynamic propagation stage is discussed below with a first solution to ensure the stability of the cross correlation propagation, such as at step 608 of the process 600. Equation (4) includes an adaptive scale factor $\eta^g$ to approximately calculate the scale factor $\alpha_i^{-,\frac{q}{2}}$, which is used for the cross-correlation update $\rho^-$ at the dynamic propagation stage shown in equation (7). The adaptive scale factor $\eta^g$ is helps to bound the cross correlation update $\rho^-$. Bounding the coefficients of the cross-correlation function $\rho_{ij}^-$ within one can help the aggregate predictive filter 42 to be stable and reliable. In particular, equations (4), (5), and (7) described above do not unconditionally guarantee that the coefficients of the cross-correlation function $\rho_{ij}^- \leq 1$.

Accordingly, the coefficients of the cross-correlation function $\overline{\rho_{ij}}$ in the dynamic propagation stage may be bounded within an upper limit of $\overline{\rho_{LIM}}$ which can be chosen based on simulations, for example. In particular, the coefficients of the cross-correlation function $\overline{\rho_{ij}}$ may be bounded according to the equation:

$$\overline{\rho_{ij}} \approx \frac{Q_{xx,ij}}{\eta(1+Q_{xx,ii})\eta(1+Q_{xx,jj})} \leq \overline{\rho_{LIM}}$$

$$\Leftrightarrow \eta^2 \geq \frac{Q_{xx,i,j}}{\overline{\rho_{LIM}}(1+Q_{xx,ii})(1+Q_{xx,jj})} \quad (10).$$

As shown by equation (10), the variable $\eta^2$ may be associated with a set of *a priori* elements of the matrices $Q_{xx,ij}$, $Q_{xx,ii}$, $Q_{xx,jj}$, and the upper limit $\overline{\rho_{LIM}}$. The fixed point representation of equation (10) may be defined by the equation:

$$\left(\eta_{ij}^2\right)^q \geq \left\lceil \frac{\left(\frac{2^q}{\overline{\rho_{LIM}}}\right)Q_{xx,ij}^q}{\left(2^{\frac{q}{2}}+\frac{Q_{xx,ii}^q}{2^{\frac{q}{2}}}\right)\left(2^{\frac{q}{2}}+\frac{Q_{xx,jj}^q}{2^{\frac{q}{2}}}\right)} \right\rceil \quad (11),$$

where

$$2^{\frac{q}{2}-1} \leq \eta_{ij}^{\frac{q}{2}} \leq 2^{\frac{q}{2}}.$$

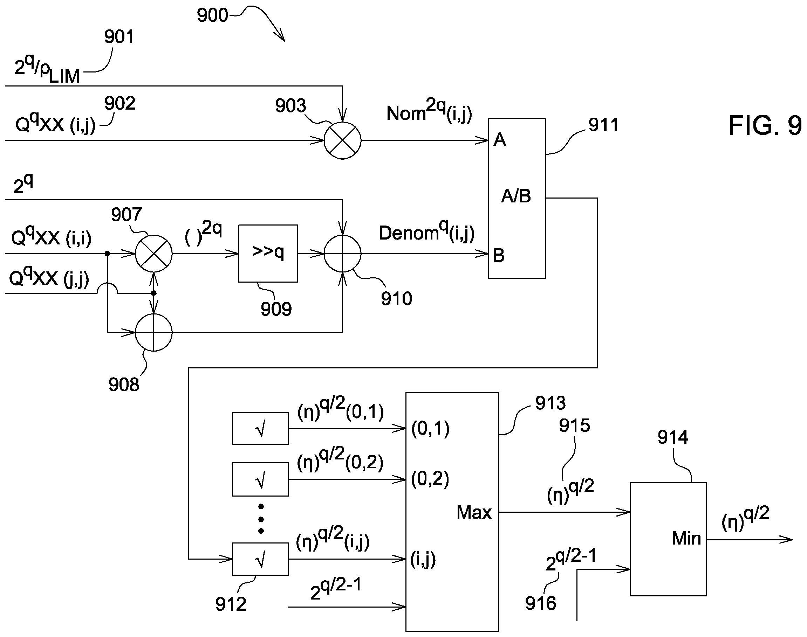

Theoretically, the selection of the adaptive scale factor $\eta^q$ requires the calculation of all the $\left(\eta_{ij}^2\right)^q$ for each (i, j) term in the Q matrix. FIG. 9 illustrates the calculation of equation (11) where a multiplier 903 combines the signal 901 and signal 902 to create the numerator of equation (11). The expansion of the denominator of equation (11) may be achieved through an arithmetic module including a multiplier 907, adders 908 and 910, and a right shift module 909, according to one embodiment. A divider 911 can combine the numerator and denominator to create an integer quotient which is processed by a square root module 912 to obtain one element of $\left(\eta_{ij}\right)^{\frac{q}{2}}$ in equation (11). The maximum $\left(\eta\right)^{\frac{q}{2}}$ 915 may be selected by the module 913. In order not to excessively bias the calculation of equation (10), the unit 914 can be used to cap the maximum $\left(\eta\right)^{\frac{q}{2}}$ utilized for equation (10).

**[G. Second Solution to Ensure Stability of Cross Correlation Propagation]**

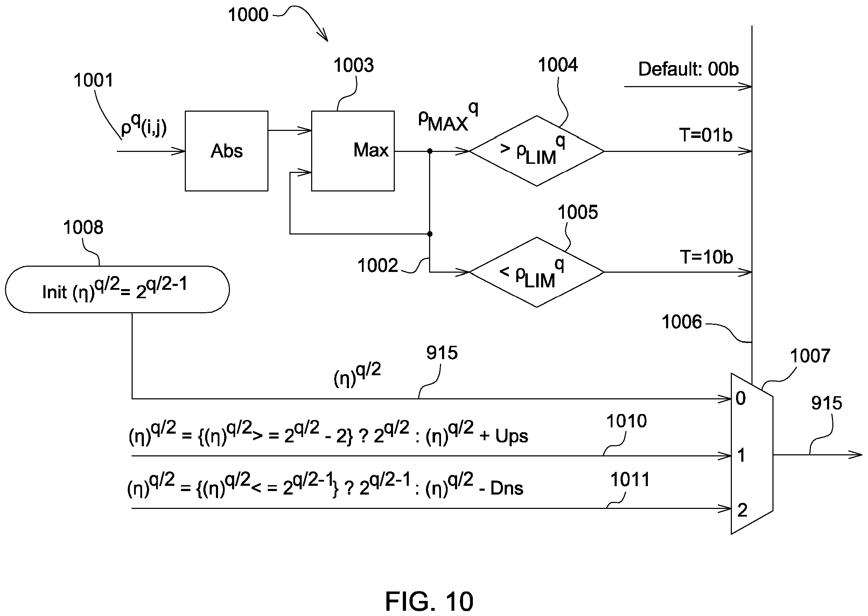

The adaptive selection of scale factor $\eta^q$ 915 as shown by FIG. 9 and equation (11) may be difficult to implement in a digital circuit due to the square root module 912. To make the algorithm easier to implement in a digital circuit, FIG. 10 illustrates an alternative algorithm where (1) the scale factor 915 can be initialized through by a default value 1008;

and (2) the cross correlation term 1001 may calculated sequentially. Each absolute value of the signal 1001 may be compared with the current maximum cross correlation coefficient 1002, and the greater value can be used to update the signal 1002. Therefore, the signal 1002 may be the maximum absolute cross correlation coefficient, which is compared with a selected threshold $\overline{\rho_{LIM}}$ through the comparators 1004 and 1005. The comparators 1004 and 1005 can generate a selection signal 1006 which controls a multiplexer 1007 to update the scale factor 915 with one of the three candidates 915, 1010, and 1011. If the maximum cross correlation coefficient 1002 is greater than the threshold $\overline{\rho_{LIM}}$, the scale factor 915 may be increased by *Ups* (i.e., updated using signal 1010); if the maximum cross correlation coefficient 1002 is less than the threshold $\overline{\rho_{LIM}}$, the scale factor 915 may be decreased by *Dns* (i.e., updated using signal 1011); otherwise, the current scale factor 915 may be kept constant.

**[III. Standard Deviation, Cross Correlation, & State Update in Measurement Update Stage]**

**[A. Derivation of Instant Observation Matrix]**

At step 612 of the process 600, the measurement may start with building an updated observation matrix 745 with a precision of h bits, which is modeled by:

$$H_i^h = H_{B,i}^t \sigma_i^{-,h} >> t \ (12), \text{ where } i = 0, 1, \ldots, N-1.$$

Equation (12) may be realized using a function module 720 and a right shift 721 of FIG. 7. In equation (12), the observation matrix $H_i^h$ may be computed based on a base observation matrix of $H_{B,i}^t$, which is a constant matrix with terms relating to shift, velocity, and acceleration.

**[B. Construction of Predictive Discriminator Error]**

At step 614, the innovation signal 747 may be calculated which denotes the deviation of the system predicted error 746 against the discriminator observed error signal 755. The system predicted measurement $\hat{y}_{n+1}^r$ may then be determined with the unit 734, according to the equation:

$$\hat{y}_{n+1}^r = H^h \hat{x}_{n+1}^{-,r-h} \ (13).$$

**[C. Creation of Innovation Sequence]**

Accordingly, the innovation signal $V_{obs}^r$ 747 may be a combination of the predicted error $\hat{y}_{n+1}^r$ 746 from equation (13) and the discriminator observed error signal $y_{n+1}^r$ 755, and may be defined as:

$$V_{obs}^r = y_{n+1}^r - \hat{y}_{n+1}^r \ (14).$$

**[D. Definitions of D and omega]**

At step 616 of the process 600, the measurement update for the standard deviation and cross-correlation functions may be determined by the observation matrix $H_i^h$ from equation (12), $\sigma^h$ from equation (6), and $\rho^q$ from equation (7). A weighted standard deviation $D_i^q$ may be calculated according to the equation:

$$D_i^q = \left( \sum\nolimits_{k=0}^{N-1} H_k^h \rho_{ik}^{-,q} \right) >> h \quad (15),$$

which is a summation of the product of the observation matrix $H_i^h$ and the dynamic update for the cross-correlation function $\rho$ using a function unit 722, followed by a symmetric truncation of $h$ bits through a scale factor unit 723.

A sum $\Omega^2$ of the weighted standard deviation may be calculated by:

$$\left( \Omega^2 \right)^q = \left( \sum\nolimits_{k=0}^{N-1} H_k^h D_i^q \right) >> h + R^q \quad (16),$$

which is a summation of the product of the observation matrix $H_i^h$ and the weighted standard deviation $D_t q$ using a function unit 724, followed by a symmetric truncation of h bits through a scale factor unit 725. The output of the scale factor unit 725 may be added by an user-defined observation noise matrix $R^q$ to achieve the sum $(\Omega^2)^q$.

**[E. Definition of equivalent Kalman gain for sigma rho filter]**

The Kalman gain of the aggregated predictive filter 42 may be calculated using the observation matrix $H_i^h$ from equation (12) and the dynamic update for the cross-correlation function $\rho$, according to the equation:

$$K_i^h = \left( \sum\nolimits_{k=0}^{N-1} H_k^h \rho_{ik}^{-,q} \right) >> q \quad (17).$$

Equation (17) may calculate the Kalman gain by a summation of the product of the observation matrix $H_i^h$ and the dynamic update for the cross-correlation function $\rho$, followed by a symmetric truncation of q bits. The operations of equation (17) may be performed by a function unit 736.

**[F. Definition of parameter beta]**

In order to discuss the standard deviation and cross correlation updates at the measurement update stage, some intermediate calculations may be derived from equations (15) and (16) to define the variable $\left( \beta_i^2 \right)^q$, which is the key parameter to propagate the cross correlation and standard deviation at the measurement update stage, such as at step 618 of the process 600. Additionally, the range of the variable $\left( \beta_i^2 \right)^q$ may play an important role for the stability of the cross correlation and standard deviation propagation. The variable $\left( \beta_i^2 \right)^q$ may be defined according to the equation:

$$\left( \beta_i^2 \right)^q = ROUND \left( \frac{D_i^q D_i^q}{\left( \Omega^2 \right)^q} \right) \quad (18),$$

which may be performed by a function block 726 in FIG. 7.

**[G. Solution to control the range of the parameter beta]**

At step 620 of the process 600, and as will be shown in equation (21) described below, $\dfrac{1}{\sqrt{1 - \beta_i^2}}$ is used to propagate the cross correlation. To improve the stability of $\frac{1}{\sqrt{1-\beta_i^2}}$ in fixed point mode, the variable $\beta_i^2$ is required to be less than 1 (to make the square root calculation valid) but not too close to 1 (to make the inverse calculation stable).

Therefore, a rescale parameter $\gamma$ can be introduced to bound the variable $\beta_i^2$ within an appropriate range. The fixed point version of the rescale of the variable $\left(\beta_i^2\right)^q$ may be defined by:

$$\left(\beta_i^2\right)^q = ROUND\left(\gamma\left(\beta_i^2\right)^q\right) \ (19),$$

which may be performed by a rescale module 727.

An arbitrary threshold $\left(\beta_{LIM}^2\right)^q$ may be pre-defined to instantly select the rescale parameter $\gamma$ that can bound all $\left(\beta_i^2\right)^q$ $(i = 1, 2, .., N)$ within $\left(\beta_{LIM}^2\right)^q$. The rescale parameter $\gamma$ may be selected to bound $\left(\beta_i^2\right)^q$ to less than one during the measurement update stage, according to the equation:

$$\gamma = \frac{\left(\beta_{LIM}^2\right)^q}{max\left\{\left(\beta_i^2\right)^q\right\}} \ (20).$$

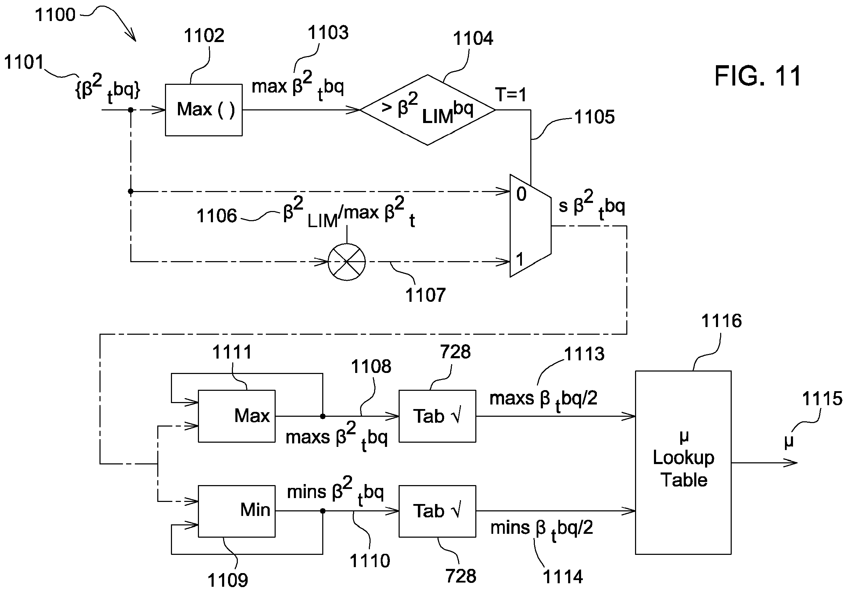

In particular, equation (20) may calculate the rescale parameter $\gamma$ by dividing the predetermined upper limit $\left(\beta_{LIM}^2\right)^q$ by a maximum of the variable $\left(\beta_i^2\right)^q$. FIG. 11 illustrates the rescale computation of equation (19) where the maximum unit 1102 selects the maximum value from the vector of $\left\{\left(\beta_i^2\right)^q\right\}$ 1101; and the comparator 1104 tests the condition of $\left(\beta_{max}^2\right)^q > \left(\beta_{LIM}^2\right)^q$. If it is true, the rescale parameter $\gamma$ may be calculated based on equation (20) and the vector of $\left\{\left(\beta_i^2\right)^q\right\}$ may be scaled accordingly. Otherwise, the rescale parameter $\gamma = 1$ and the vector $\left\{\left(\beta_i^2\right)^q\right\}$ can be used directly.

**[H. Standard deviation update]**

At step 622 of the process 600, the measurement update of the standard deviation function $\sigma_i^+$ may be calculated by the function module 737 and the shift module 738 according to the equation:

$$\sigma_i^{+,h} = \sigma_i^{-,h}\alpha_i^{1,\frac{q}{2}} >> \frac{q}{2} \ (21),$$

where

$$\alpha_i^{+,\frac{q}{2}} = \left( \frac{\sigma_i^{+,h}}{\sigma_i^{-,h}} \right)^{\frac{q}{2}}$$

$$= \left( \sqrt{1 - \beta_i^2} \right)^{\frac{q}{2}} \qquad (22).$$

$$= \sqrt{2^q - \left( \beta_i^2 \right)^q}$$

$$\approx 2^{\frac{q}{2}} - \mu^v \left( \beta_i^2 \right)^q \gg \left( v + \frac{q}{2} \right)$$

The selection of a scale factor $\mu^v$ with v bits precision in equation (22) is important to bound the cross correlation within 1. An analysis and solution related to this selection is described below. By assuming an appropriate scale factor $\mu^v$ is already selected, the function module 730 and the right shift module 731 may perform the calculation of equation (22).

Equation (21) may calculate the measurement update of the standard deviation function $\sigma_i^+$ based on multiplying the dynamic update of the standard deviation function $\sigma$ and the variable $\alpha_i^{+,\frac{q}{2}}$ from equation (22), followed by a symmetric truncation of $\frac{q}{2}$ bits.

**[I. Cross correlation update]**

The measurement update of the cross-correlation function $\rho_{ij}^+$ may be calculated according to the equation:

$$\rho_{ij}^{+,q} = \left( \frac{1}{\alpha_i^+} \right)^{\frac{q}{2}} \left( \frac{1}{\alpha_j^+} \right)^{\frac{q}{2}} \left( \rho_{ij}^{-,q} - \beta_i^{\frac{q}{2}} \beta_j^{\frac{q}{2}} \right) \gg q \quad (23),$$

where

$$\left( \frac{1}{\alpha_i^+} \right)^{\frac{q}{2}} := ROUND \left( \frac{2^q}{\alpha_i^{+,\frac{q}{2}}} \right) \quad (24).$$

In particular, $\beta_i^{\frac{q}{2}}$ in equation (23) may be obtained through looking up a square root table 728 based on the input of $\left( \beta_i^2 \right)^q$. A square root table is a reasonable implementation as $\left( \beta_{LIM}^2 \right)^q$ is the maximum value that $\left( \beta_i^2 \right)^q$ can reach. A function unit 732 may inverse $\alpha_i^{+,\frac{q}{2}}$ based on equation (24), which is combined with $\rho_{ij}^{-,q}$ and $\beta_i^{\frac{q}{2}}$ through equation (23). The output of the function unit 732 is symmetrically truncated by q bits using a scale factor unit 733.

**[J. Analysis of selection of parameter mu to control stability of cross correlation update]**

Before describing the state propagation at the measurement update stage, the selection of the scale factor $\mu$

to compute $\left(\sqrt{1-\beta_i^2}\right)^{\frac{q}{2}}$ in equation (22) (described above) is important to guarantee: (1) the stability of standard deviation propagation (equation (22)) such that $\left(\beta_i^2\right)^q \leq \left(\beta_{LIM}^2\right)^q$, $\forall i$; and (2) the stability of cross correlation propagation (equation (23)) as the selection of $\mu$ impact the calculation of $\left(\dfrac{1}{\alpha_i^+}\right)^{\frac{q}{2}}$, thus affecting the range of cross correlation at measurement update.

In particular, the measurement update of the cross-correlation function $\rho_{ij}^+$ in equation (23) may be calculated at floating point according to the equation:

$$\rho_{ij}^+ = \frac{\rho_{ij}^- - \beta_i\beta_j}{\sqrt{1-\beta_i^2}\sqrt{1-\beta_j^2}}$$
$$\approx \frac{\rho_{ij}^- - \beta_i\beta_j}{\left(1-\mu_{ij}\beta_i^2\right)\left(1-\mu_{ij}\beta_j^2\right)} \qquad (25).$$

Equation (25) can calculate the measurement update of the cross-correlation function $\rho_{ij}^+$ based on the dynamic update of the cross-correlation function $\rho^-$ and the variable $\beta_i^2$ defined by equation (18). As can be seen in equation (25), the adaptive scale factor $\mu$ can be determined to ensure that the measurement update of the cross-correlation function $\rho_{ij}^+$ is bounded within one, due to the approximation to the square root in the denominator of equation (25).

In one embodiment, to guarantee that the measurement update of the cross-correlation function $\rho_{ij}^+ < 1$, < 1, equation (25) may be equivalent to the following optimization problem as defined by:

$$\mu = \arg\min_{i,j}\left\{\mu_{ij}\right\}$$
$$st. \qquad\qquad (26).$$
$$\forall i,j \in [0, N-1],$$
$$\beta_i^2\beta_j^2\mu_{ij}^2 - \left(\beta_i^2 + \beta_j^2\right)\mu_{ij} + \beta_i\beta_j \geq 0 @ \rho_{ij}^- = 1$$

The solution to the inequality of the parabola defined by equation (26) is

$$\mu_{ij} = \begin{cases} \mu_{ij}^1 & \text{if } 0 \leq \mu_{ij}^1 < 1 \\ 0 & \text{if } \mu_{ij}^1 < 0 \\ 1 & \text{if } \mu_{ij}^1 \geq 1 \end{cases} \qquad (27),$$

where

$$\mu_{ij}^1 = \frac{B - \sqrt{B^2 - 4AC}}{2A} \qquad (28),$$

$$B^2 - 4AC = \left(\beta_i^2 + \beta_j^2\right)^2 - 4\beta_i^3\beta_j^3$$
$$\geq 4\beta_i^2\beta_j^2 - 4\beta_i^3 4\beta_j \quad (29),$$
$$\geq 0$$

and

$$\begin{cases} A = \beta_i^2\beta_j^2 \geq 0 \\ B = \beta_i^2 + \beta_j^2 \geq 0 \quad (30). \\ C = \beta_i\,\beta_j \geq 0 \end{cases}$$

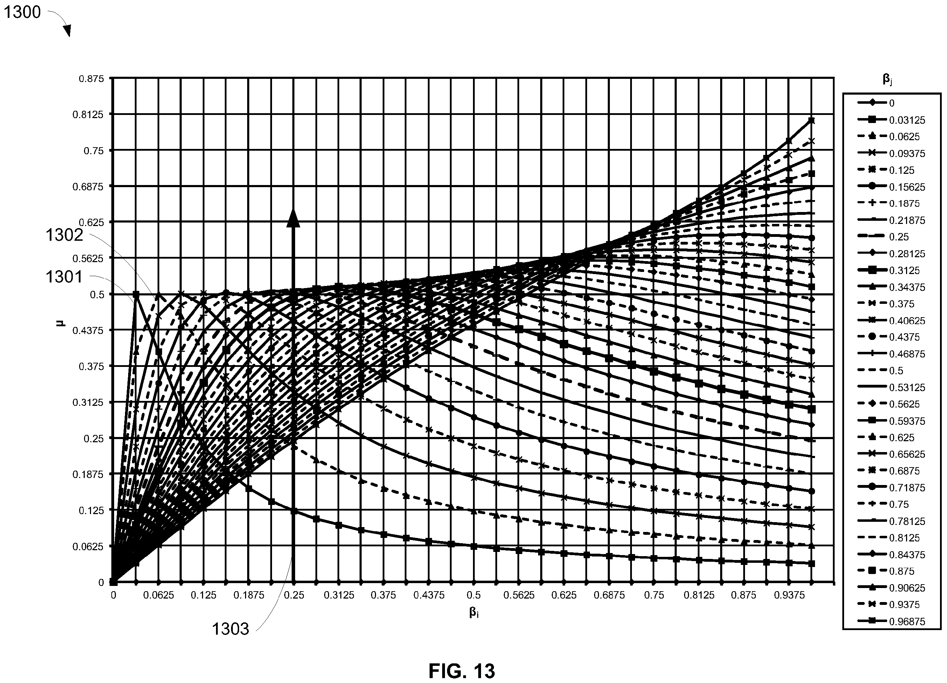

A numerical solution of the adaptive scale factor $\mu$ in equation (27) can be based on a pair of input $(\beta_i,\beta_j)$ to be evaluated, where $\beta_i$ ranges from 0 to 1 with a step of 1/32 and $\beta_j$ is selected from 0 to 1 with a step of 1/32. FIG. 13 illustrates the numerical results in a graph, where curve 1301 depicts the adaptive scale factor $\mu$ based on equation (27) by fixing $\beta_i$ = 1/32 and sweeping $\beta_j$ = [0,1], and curve 1302 depicts the adaptive scale factor $\mu$ by fixing $\beta_i$ = 2/32. Comparing the curves 1301 and 1302, given a fixed $\beta_j$ (as shown by the vertical line 1303) where $\beta_j > \beta_i$, the less $\beta_i$ is, the less the solution of the adaptive scale factor $\mu$ is. Therefore, a practical solution to select the adaptive scale factor $\mu$ suitable for any pair of $(\beta_i,\beta_j)$ per equation (26) can be realized through two steps: (1) finding the minimum $\beta$ denoted as $\beta_{\min}$ and the maximum $\beta$ denoted as $\beta_{\max}$; and (2) finding the solution of the adaptive scale factor $\mu$ to the pair of $(\beta_{\min},\beta_{\max})$. Based on the above, this is the minimum solution that satisfies the argument of equation (26).

**[K. First adaptive algorithm to select mu]**

In an embodiment, FIG. 11 illustrates the adaptive scale factor $\mu$ selection process described above, where the unit 1111 remembers the maximum $\beta_{\max}$ 1108 within the vector $\{\beta_i\}$, and the unit 1109 remembers the minimum $\beta_{\min}$ 1110 within the vector $\{\beta_i\}$. As described above, a square root table 728 (shown in FIG. 7) is a reasonable and convenient implementation to perform the square root operation. The resulting pair $\left(\beta_{\min}^{\frac{q}{2}}, \beta_{\max}^{\frac{q}{2}}\right)$ may be the entry for a two-dimensional lookup table 1115 to obtain the minimum argument of the adaptive scale factor $\mu$ described by equation (26).

**[L. Practical solution for selecting mu]**

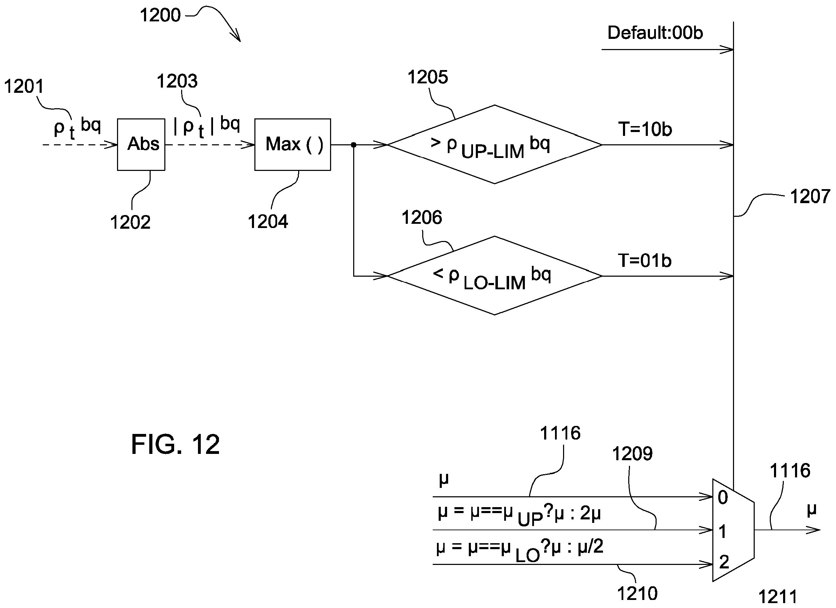

In another embodiment, equation (25) implies that by lowering the range of the adaptive scale factor $0 \leq \mu \leq 1$, the cross correlation $\rho^+$ gets smaller. Thus, another method of adaptively adjusting the adaptive scale factor $\mu$ is illustrated in FIG. 12 using a halve-double method, such as at step 624 of the process 600. The unit 1202 may take the absolute value of a vector $\{\rho_{ij}^+\}$, then a selector 1204 may select the maximum $\rho_{\max}^+$ from vector 1203. A comparator 1205 can compare $\rho_{\max}^+$ with an upper limit $\rho_{UP-LIM}^+$ and a comparator 1206 may compare $\rho_{\max}^+$ with a lower limit $\rho_{LO-LIM}^+$. The comparators 1205, 1206 may create a selection signal 1207 which determines whether the adaptive scale factor $\mu$ 1116 is kept constant, or is doubled 1209 or halved 1210.

**[M. State Update]**

At step 626 of the process 600, the state propagation $\overset{\backslash}{x}_{i,n+1}^{+,j-h}$ may be determined to complete the measurement update stage, according to the equation:

$$\left\langle x \right\rangle_{i,n+1}^{+,r-h} = \left(\frac{1}{\alpha_i^+}\right)^{\frac{q}{2}} \left\langle x \right\rangle_{i,n+1}^{-,r-h} >> \frac{q}{2} + \left\{ \left[\frac{K_i^h V_{obs}^r}{\sigma_{\varphi cr}^{+,h}}\right] >> h \right\} \quad (31).$$

In one embodiment, a function unit 739 may calculate $\left[\dfrac{K_i^h V_{obs}^r}{\sigma_{\varphi cr}^{+,h}}\right]$ followed by a scale factor unit 740 to obtain the intermediate results of the second half of equation (31). A function unit 741 may calculate $\left(\dfrac{1}{\alpha_i^+}\right)^{\frac{q}{2}} \left\langle x \right\rangle_{i,n+1}^{-,r-h}$ followed by a shift unit 742 to obtain the first half of equation (31). The two parts may be added to generate the state measurement update signal 703.

The receiver disclosed in this document is well-suited for: (1) utilizing an aggregate predictive fixed point sigma rho filter to improve real time carrier and code tracking of received signals; and (2) implementing the fixed point sigma rho filter using adaptive strategies to control the range of the cross correlation term to ensure the stability and reliability of the filter.

Any process descriptions or blocks in figures should be understood as representing modules, segments, or portions of code which include one or more executable instructions for implementing specific logical functions or steps in the process, and alternate implementations are included within the scope of the embodiments of the invention in which functions may be executed out of order from that shown or discussed, including substantially concurrently or in reverse order, depending on the functionality involved, as would be understood by those having ordinary skill in the art.

This disclosure is intended to explain how to fashion and use various embodiments in accordance with the technology. The foregoing description is not intended to be exhaustive or to be limited to the precise forms disclosed. Modifications or variations are possible in light of the above teachings. The embodiment(s) were chosen and described to provide the best illustration of the principle of the described technology and its practical application, and to enable one of ordinary skill in the art to utilize the technology in various embodiments and with various modifications as are suited to the particular use contemplated. Such modifications and variations can be within the scope of the embodiments as determined by the appended claims.

## Claims

1. A satellite navigation receiver comprising:

a receiver front end adapted to down-convert a composite received signal comprising a plurality of carrier signals;
an analog-to-digital converter adapted to convert the down-converted composite received signal to a digital composite received signal;
a plurality of signal generators each adapted to generate a local reference carrier signal and a local reference ranging code based on carrier corrective control data and code corrective control data, wherein the carrier corrective control data comprises carrier corrective control data at a reference frequency and carrier corrective control data at a frequency of each of the plurality of carrier signals, the code corrective control data comprises code corrective control data at the reference frequency and code corrective control data at the frequency of each of the plurality of carrier signals, and wherein the local reference carrier signal and the local reference ranging code are associated with one of the plurality of carrier signals;
a plurality of receiver modules each comprising a correlator adapted to determine one of a plurality of correlations of the digital composite received signal to the local reference carrier signal and the local reference ranging code, wherein each of the plurality of correlations comprises an in-phase correlation and a quadrature correlation and is associated with one of the plurality of carrier signals; and
an aggregate predictive filter in communication with the plurality of signal generators, the aggregate predictive filter adapted to estimate the carrier corrective control data and the code corrective control data based on the plurality of correlations, wherein the aggregate predictive filter estimates the carrier corrective control data and the code corrective control data at the reference frequency based on the plurality of correlations, and wherein the carrier corrective control data and the code corrective control data represent a correction to a range estimation between the receiver and a satellite, wherein the aggregate predictive filter comprises:

a carrier loop discriminator adapted to determine a carrier tracking error at the reference frequency from the plurality of correlations, a code loop discriminator adapted to determine a code tracking error at the reference frequency from the plurality of correlations; and a joint estimator adapted to:

determine the carrier corrective control data at the reference frequency and the code corrective control data at the reference frequency, based on the carrier tracking error and the code tracking error; and estimate individually the carrier corrective control data at the frequency of each of the plurality of carrier signals and the code corrective control data at the frequency of each of the plurality of carrier signals, based on the carrier tracking error and the code tracking error;

a plurality of scaling modules in communication with the aggregate predictive filter, each of the plurality of scaling modules adapted to respectively scale the carrier corrective control data and the code corrective control data at the reference frequency to scaled carrier corrective control data and scaled code corrective control data at the frequency of each of the plurality of carrier signals;
wherein the plurality of signal generators is adapted to generate the local reference carrier signal and the local reference ranging code based on the scaled carrier corrective control data and the scaled code corrective control data.

2. The satellite navigation receiver of claim 1, wherein:

each of the plurality of correlations is for a frequency of each of the plurality of carrier signals;
the aggregate predictive filter is further adapted to weight each of the plurality of correlations based on a signal quality metric.

3. The satellite navigation receiver of claim 2, wherein the signal quality metric comprises one or more of a signal-to-noise ratio or a moving average of the signal-to-noise ratio over a sliding window.

4. The satellite navigation receiver of any preceding claim, further comprising a navigation estimator adapted to estimate one or more of a position or a velocity based on a phase of local reference carrier signal and a phase of the local reference ranging code.

5. The satellite navigation receiver of any preceding claim, wherein the aggregate predictive filter comprises a fixed-point sigma-rho filter adapted to estimate the carrier corrective control data and the code corrective control data, wherein the carrier corrective control data and the code corrective control data comprise one or more of an estimated code phase, an estimated carrier phase at a reference frequency, a Doppler shift, a rate of change of the Doppler shift, a strength of the plurality of carrier signals, or an amplitude of the plurality of carrier signals.

6. The satellite navigation receiver of any preceding claim, wherein the aggregate predictive filter comprises a fixed-point sigma rho filter adapted to estimate the carrier corrective control data and the code corrective control data using a dynamic propagation stage and a measurement update stage, based on a standard deviation function (sigma) and a cross-correlation function (rho).

7. The satellite navigation receiver of claim 6, wherein the fixed-point sigma-rho filter estimates the carrier corrective control data and the code corrective control data by dynamically selecting an adaptive scale factor $\eta$ to bound coefficients of the cross-correlation function within one during the dynamic propagation stage, based on previous coefficients of the cross-correlation function.

8. The satellite navigation receiver of claim 6, wherein the fixed-point sigma-rho filter estimates the carrier corrective control data and the code corrective control data by selecting a rescale parameter $\gamma$ to limit a parameter $\beta$ to less than one during the measurement update stage, based on a predetermined upper limit.

9. The satellite navigation receiver of claim 6, wherein the fixed-point sigma-rho filter estimates the carrier corrective control data and the code corrective control data by determining an adaptive scale factor $\mu$ to limit coefficients of the cross-correlation function within one during the measurement update stage, wherein the adaptive scale factor is selected from a plurality of predetermined scale factors stored in a lookup table, based on indices of $\beta_i$ and $\beta_j$.

10. The satellite navigation receiver of claim 6, wherein the fixed-point sigma-rho filter estimates the carrier corrective control data and the code corrective control data by determining an adaptive scale factor $\mu$ to limit coefficients of the cross-correlation function within one during the measurement update stage, wherein the adaptive scale factor is determined by:

doubling the adaptive scale factor until a predetermined maximum value is reached, if a maximum coefficient of the cross-correlation function is greater than a predetermined upper threshold; and
halving the adaptive scale factor, if the maximum coefficient of the cross-correlation function is less than a predetermined lower threshold.

11. The satellite navigation receiver of any preceding claim, wherein the plurality of carrier signals comprises a first carrier (L1), a second carrier (L2), and a third carrier (L5).

12. The satellite navigation receiver of any preceding claim:

further comprising a band pass filter adapted to filter the digital composite received signal into a plurality of filtered carrier signals that are each associated with a different carrier signal within the digital composite received signal;
wherein the correlator of each of the plurality of receiver modules is adapted to determine the correlation of one of the plurality of filtered carrier signals to the local reference carrier signals and the local reference ranging code.

**Patentansprüche**

1. Satellitennavigationsempfänger, umfassend:

ein Empfänger-Front-End, das zum Abwärtsumwandeln eines zusammengesetzten empfangenen Signals, das mehrere Trägersignale umfasst, ausgeführt ist;
ein Analog-Digital-Wandler zum Umwandeln des abwärtsgewandelten zusammengesetzten empfangenen Signals in ein digitales zusammengesetztes empfangenes Signal;
mehrere Signalgeneratoren, die jeweils zum Erzeugen eines lokalen Referenzträgersignals und eines lokalen Referenzentfernungsmessungscodes auf Basis von Trägerkorrektur-Steuerdaten und von Codekorrektur-Steuerdaten ausgeführt sind, wobei die Trägerkorrektur-Steuerdaten Trägerkorrektur-Steuerdaten auf einer Referenzfrequenz und Trägerkorrektur-Steuerdaten auf einer Frequenz jedes der mehreren Trägersignale umfassen, die Codekorrektur-Steuerdaten Codekorrektur-Steuerdaten auf der Referenzfrequenz und Codekorrektur-Steuerdaten auf der Frequenz jedes der mehreren Trägersignale umfassen und wobei das lokale Referenzträgersignal und der lokale Referenzentfernungsmessungscode mit einem der mehreren Trägersignale verbunden sind;
mehrere Empfängermodule, die jeweils einen Korrelator umfassen, der zum Bestimmen von einem von mehreren Korrelationen des digitalen zusammengesetzten empfangenen Signals mit dem lokalen Referenzträgersignal und dem lokalen Referenzentfernungsmessungscode ausgeführt ist, wobei jede der mehreren Korrelationen eine gleichphasige Korrelation und eine Quadraturkorrelation umfasst und mit einem der mehreren Trägersignale verbunden ist; und
ein aggregierendes prädiktives Filter, das mit den mehreren Signalgeneratoren in Kommunikation steht, wobei das aggregierende prädiktive Filter zum Schätzen der Trägerkorrektur-Steuerdaten und der Codekorrektur-Steuerdaten auf Basis der mehreren Korrelationen ausgeführt ist, wobei das aggregierende prädiktive Filter die Trägerkorrektur-Steuerdaten und die Codekorrektur-Steuerdaten auf der Referenzfrequenz auf Basis der mehreren Korrelationen schätzt und wobei die Trägerkorrektur-Steuerdaten und die Codekorrektur-Steuerdaten eine Korrektur einer Entfernungsschätzung zwischen dem Empfänger und einem Satelliten repräsentieren, wobei das aggregierende prädiktive Filter umfasst:
einen Trägerschleifendiskriminator, der zum Bestimmen eines Träger-Trackingfehlers bei der Referenzfrequenz anhand der mehreren Korrelationen ausgeführt ist, einen Codeschleifendiskriminator, der zum Bestimmen eines Code-Trackingfehlers bei der Referenzfrequenz anhand der mehreren Korrelationen ausgeführt ist; und einen gemeinsamen Schätzer, der ausgeführt ist zum:

Bestimmen der Trägerkorrektur-Steuerdaten auf der Referenzfrequenz und der Codekorrektur-Steuerdaten auf der Referenzfrequenz auf Basis des Träger-Trackingfehlers und des Code-Trackingfehlers; und
einzelnen Schätzen der Trägerkorrektur-Steuerdaten auf der Frequenz jedes der mehreren Trägersignale und der Codekorrektur-Steuerdaten auf der Frequenz jedes der mehreren Trägersignale auf Basis des Träger-Trackingfehlers und des Code-Trackingfehlers;

mehrere Skalierungsmodule, die mit dem aggregierenden prädiktiven Filter in Kommunikation stehen, wobei die mehreren Skalierungsmodule jeweils zum jeweiligen Skalieren der Trägerkorrektur-Steuerdaten und der Codekorrektur-Steuerdaten auf der Referenzfrequenz auf skalierte Trägerkorrektur-Steuerdaten und skalierte Codekorrektur-Steuerdaten auf der Frequenz jeder der mehreren Trägersignale ausgeführt sind;
wobei die mehreren Signalgeneratoren zum Erzeugen des lokalen Referenzträgersignals und des lokalen Referenzentfernungsmessungscodes auf Basis der skalierten Trägerkorrektur-Steuerdaten und der skalierten Codekorrektur-Steuerdaten ausgeführt sind.

2. Satellitennavigationsempfänger nach Anspruch 1, wobei:

die mehreren Korrelationen jeweils für eine Frequenz von jedem der mehreren Trägersignale sind;
das aggregierende prädiktive Filter ferner zum Gewichten von jeder der mehreren Korrelationen auf Basis einer Signalqualitätsmetrik ausgeführt ist.

3. Satellitennavigationsempfänger nach Anspruch 2, wobei die Signalqualitätsmetrik eines oder mehrere von einem Signal-Rausch-Verhältnis oder einem gleitenden Mittelwert des Signal-Rausch-Verhältnisses über ein Schiebefenster umfasst.

4. Satellitennavigationsempfänger nach einem der vorhergehenden Ansprüche, der ferner einen Navigationsschätzer umfasst, der zum Schätzen von einem oder mehreren von einer Position oder einer Geschwindigkeit auf Basis einer Phase eines lokalen Referenzträgersignals und einer Phase des lokalen Referenzentfernungsmessungscodes ausgeführt ist.

5. Satellitennavigationsempfänger nach einem der vorhergehenden Ansprüche, wobei das aggregierende prädiktive Filter ein Festkomma-Sigma-Rho-Filter umfasst, das zum Schätzen der Trägerkorrektur-Steuerdaten und der Codekorrektur-Steuerdaten ausgeführt ist, wobei die Trägerkorrektur-Steuerdaten und die Codekorrektur-Steuerdaten eine oder mehrere von einer geschätzten Codephase, einer geschätzten Trägerphase bei einer Referenzfrequenz, einer Doppler-Verschiebung, einer Änderungsrate der Dopplerverschiebung, einer Stärke der mehreren Trägersignale oder einer Amplitude der mehreren Trägersignale umfassen.

6. Satellitennavigationsempfänger nach einem der vorhergehenden Ansprüche, wobei das aggregierende prädiktive Filter ein Festkomma-Sigma-Rho-Filter umfasst, das zum Schätzen der Trägerkorrektur-Steuerdaten und der Codekorrektur-Steuerdaten unter Verwendung einer dynamischen Ausbreitungsstufe und einer Messungsaktualisierungsstufe auf Basis einer Standardabweichungsfunktion (Sigma) und einer Kreuzkorrelationsfunktion (Rho) ausgeführt ist.

7. Satellitennavigationsempfänger nach Anspruch 6, wobei das Festkomma-Sigma-Rho-Filter die Trägerkorrektur-Steuerdaten und die Codekorrektur-Steuerdaten durch dynamisches Auswählen eines adaptiven Skalierungsfaktors $\eta$ schätzt, um Koeffizienten der Kreuzkorrelationsfunktion auf Basis vorheriger Koeffizienten während der dynamischen Ausbreitungsstufe der Kreuzkorrelationsfunktion auf innerhalb eins zu beschränken.

8. Satellitennavigationsempfänger nach Anspruch 6, wobei das Festkomma-Sigma-Rho-Filter die Trägerkorrektur-Steuerdaten und die Codekorrektur-Steuerdaten durch Auswählen eines Reskalierungsparameters $\gamma$ schätzt, um einen Parameter $\beta$ auf Basis einer vorbestimmten Obergrenze während der Messungsaktualisierungsstufe auf weniger als eins zu begrenzen.

9. Satellitennavigationsempfänger nach Anspruch 6, wobei das Festkomma-Sigma-Rho-Filter die Trägerkorrektur-Steuerdaten und die Codekorrektur-Steuerdaten durch Bestimmen eines adaptiven Skalierungsfaktors $\mu$ schätzt, um Koeffizienten der Kreuzkorrelationsfunktion während der Messungsaktualisierungsstufe auf innerhalb eins zu begrenzen, wobei der adaptive Skalierungsfaktor aus einem von mehreren in einer Lookup-Tabelle gespeicherten vorbestimmten Skalierungsfaktoren auf Basis von Indizes $\beta_i$ und $\beta_j$ ausgewählt ist.

10. Satellitennavigationsempfänger nach Anspruch 6, wobei das Festkomma-Sigma-Rho-Filter die Trägerkorrektur-Steuerdaten und die Codekorrektur-Steuerdaten durch Bestimmen eines adaptiven Skalierungsfaktors $\mu$ schätzt, um Koeffizienten der Kreuzkorrelationsfunktion während der Messungsaktualisierungsstufe auf innerhalb eins zu begrenzen, wobei der adaptive Skalierungsfaktor bestimmt wird durch:

Verdoppeln des adaptiven Skalierungsfaktors, bis ein vorbestimmter Höchstwert erreicht wird, falls ein maximaler Koeffizient der Kreuzkorrelationsfunktion größer ist als eine vorbestimmte obere Schwelle; und Halbieren des adaptiven Skalierungsfaktors, falls der maximale Koeffizient der Kreuzkorrelationsfunktion kleiner ist als eine vorbestimmte untere Schwelle.

11. Satellitennavigationsempfänger nach einem der vorhergehenden Ansprüche, wobei die mehreren Trägersignale einen ersten Träger (L1), einen zweiten Träger (L2) und einen dritten Träger (L5) umfassen.

12. Satellitennavigationsempfänger nach einem der vorhergehenden Ansprüche:

ferner umfassend ein Bandpassfilter, das zum Filtern des digitalen zusammengesetzten empfangenen Signals in mehrere gefilterter Trägersignale, die jeweils mit einem anderen Trägersignal in dem digitalen zusammengesetzten empfangenen Signal verbunden sind, ausgeführt ist;
wobei der Korrelator von jedem der mehreren Empfängermodule zum Bestimmen der Korrelation von einem der mehreren gefilterten Trägersignale mit den lokalen Referenzträgersignalen und dem lokalen Referenzentfernungsmessungscode ausgeführt ist.

## Revendications

1. Récepteur de navigation par satellite comprenant :

un récepteur frontal adapté pour convertir par abaissement de fréquence un signal composite reçu comprenant une pluralité de signaux de porteuses ;
un convertisseur analogique/numérique adapté pour convertir le signal composite reçu converti par abaissement de fréquence en un signal composite numérique reçu ;
une pluralité de générateurs de signaux adaptés chacun pour générer un signal de porteuse de référence locale et un code de portée de référence locale sur la base de données de contrôle de correction de porteuses et de données de contrôle de correction de code, dans lequel les données de contrôle de correction de porteuses comprennent des données de contrôle de correction de porteuses à une fréquence de référence et des données de contrôle de correction de code à une fréquence de chacun de la pluralité de signaux de porteuses, les données de contrôle de correction de code comprennent des données de contrôle de correction de code à la fréquence de référence et des données de contrôle de correction de code à la fréquence de chacun de la pluralité de signaux de porteuses, et dans lequel le signal de porteuse de référence locale et le code de portée de référence locale sont associés à l'un de la pluralité de signaux de porteuses,
une pluralité de modules récepteurs comprenant chacun un corrélateur adapté pour déterminer l'une d'une pluralité de corrélations du signal composite numérique reçu avec le signal de porteuse de référence locale et le code de portée de référence locale, dans lequel chacune de la pluralité de corrélations comprend une corrélation en phase et une corrélation en quadrature et est associée à l'un de la pluralité de signaux de porteuses ; et
un filtre prédictif agrégé en communication avec la pluralité de générateurs de signaux, le filtre prédictif agrégé étant adapté pour estimer les données de contrôle de correction de porteuses et les données de contrôle de correction de code sur la base de la pluralité de corrélations, dans lequel le filtre prédictif agrégé estime les données de contrôle de correction de porteuses et les données de contrôle de correction de code à la fréquence de référence sur la base de la pluralité de corrélations, et dans lequel les données de contrôle de correction de porteuses et les données de contrôle de correction de code représentent une correction à une estimation de portée entre le récepteur et un satellite, dans lequel le filtre prédictif agrégé comprend :

un discriminateur de boucle de porteuse adapté pour déterminer une erreur de suivi de porteuse à la fréquence de référence de la pluralité de corrélations, un discriminateur de boucle de code adapté pour déterminer une erreur de suivi de code à la fréquence de référence de la pluralité de corrélations, et un estimateur commun adapté pour :

déterminer les données de contrôle de correction de porteuses à la fréquence de référence et les données de contrôle de correction de code à la fréquence de référence, sur la base de l'erreur de suivi de porteuses et de l'erreur de suivi de code ; et
estimer individuellement les données de contrôle de correction de porteuses à la fréquence de référence de chacun de la pluralité de signaux de porteuses et les données de contrôle de correction de code à la fréquence de chacun de la pluralité de signaux de porteuses, sur la base de l'erreur de suivi de porteuses et de l'erreur de suivi de code ;

une pluralité de modules d'échelonnement en communication avec le filtre prédictif agrégé, chacun de la pluralité de modules d'échelonnement étant adapté pour échelonner respectivement les données de contrôle de correction de porteuses et les données de contrôle de correction de code à la fréquence de référence en des données de contrôle de correction de porteuses échelonnées et des données de contrôle de correction de code échelonnées à la fréquence de référence de chacun de la pluralité de signaux de porteuses ; dans lequel la pluralité de générateurs de signaux est adaptée pour générer le signal de porteuse de référence locale et le code de portée de référence locale sur la base des données de contrôle de correction de porteuses échelonnées et des données de contrôle de correction de code échelonnées.

2. Récepteur de navigation par satellite selon la revendication 1, dans lequel :

chacune de la pluralité de corrélations est pour une fréquence de chacun de la pluralité de signaux de porteuses ; le filtre prédictif agrégé est adapté en outre pour pondérer chacune de la pluralité de corrélations sur la base d'une métrique de qualité de signal.

3. Récepteur de navigation par satellite selon la revendication 2, dans lequel la métrique de qualité de signal comprend un ou plusieurs d'entre un rapport signal-bruit ou une moyenne mouvante du rapport signal-bruit sur une fenêtre glissante.

4. Récepteur de navigation par satellite selon l'une quelconque des revendications précédentes, comprenant en outre un estimateur de navigation adapté pour estimer une ou plusieurs d'entre une position ou une vitesse sur la base d'une phase de signal de porteuse de référence locale et d'une phase du code de portée de référence locale.

5. Récepteur de navigation par satellite selon l'une quelconque des revendications précédentes, dans lequel le filtre prédictif agrégé comprend un filtre sigma-rho à virgule fixe adapté pour estimer les données de contrôle de correction de porteuses et les données de contrôle de correction de code, dans lequel les données de contrôle de correction de porteuses et les données de contrôle de correction de code comprennent un ou plusieurs d'entre une phase de code estimée, une phase de porteuse estimée à une fréquence de référence, un décalage Doppler, un taux de changement du décalage Doppler, une intensité de la pluralité de signaux de porteuses ou une amplitude de la pluralité de signaux de porteuses.

6. Récepteur de navigation par satellite selon l'une quelconque des revendications précédentes, dans lequel le filtre prédictif agrégé comprend un filtre sigma-rho à virgule fixe adapté pour estimer les données de contrôle de correction de porteuses et les données de contrôle de correction de code en utilisant une étape de propagation dynamique et une étape d'actualisation de mesure, sur la base d'une fonction d'écart-type (sigma) et d'une fonction de corrélation croisée (rho).

7. Récepteur de navigation par satellite selon la revendication 6, dans lequel le filtre sigma-rho à virgule fixe estime les données de contrôle de correction de porteuses et les données de contrôle de correction de code en sélectionnant dynamiquement un facteur d'échelle adaptatif $\eta$ pour limiter des coefficients de la fonction de corrélation croisée à un durant l'étape de propagation dynamique, sur la base de coefficients précédents de la fonction de corrélation croisée.

8. Récepteur de navigation par satellite selon la revendication 6, dans lequel le filtre sigma-rho à virgule fixe estime les données de contrôle de correction de porteuses et les données de contrôle de correction de code en sélectionnant un paramètre de rééchelonnement $\gamma$ pour limiter un paramètre $\beta$ à moins de un durant l'étape l'actualisation de mesure, sur la base d'une limite supérieure prédéterminée.

9. Récepteur de navigation par satellite selon la revendication 6, dans lequel le filtre sigma-rho à virgule fixe estime les données de contrôle de correction de porteuses et les données de contrôle de correction de code en déterminant un facteur d'échelle adaptatif $\mu$ pour limiter des coefficients de la fonction de corrélation croisée à un durant l'étape d'actualisation de mesure, dans lequel le facteur d'échelle adaptatif est sélectionné parmi une pluralité de facteurs d'échelle prédéterminés stockés dans une table de consultation, sur la base d'indices de $\beta_i$ et de $\beta_j$.

10. Récepteur de navigation par satellite selon la revendication 6, dans lequel le filtre sigma-rho à virgule fixe estime les données de contrôle de correction de porteuses et les données de contrôle de correction de code en déterminant un facteur d'échelle adaptatif $\mu$ pour limiter des coefficients de la fonction de corrélation croisée à un durant l'étape d'actualisation de mesure, dans lequel le facteur d'échelle adaptatif est déterminé en :

multipliant par deux le facteur d'échelle adaptatif jusqu'à ce qu'une valeur maximale prédéterminée soit atteinte, si un coefficient maximal de la fonction de corrélation croisée est plus grand qu'un seuil supérieur prédéterminé ; et

divisant par deux le facteur d'échelle adaptatif, si le coefficient maximal de la fonction de corrélation croisée est plus petit qu'un seuil inférieur prédéterminé.

11. Récepteur de navigation par satellite selon l'une quelconque des revendications précédentes, dans lequel la pluralité de signaux de porteuses comprend une première porteuse (L1), une deuxième porteuse (L2) et une troisième porteuse (L5).

12. Récepteur de navigation par satellite selon l'une quelconque des revendications précédentes :

comprenant en outre un filtre passe-bande adapté pour filtrer le signal composite numérique reçu en une pluralité de signaux de porteuses filtrés qui sont associés chacun à un signal de porteuse différent dans le signal composite numérique reçu ;
dans lequel le corrélateur de chacun de la pluralité de modules récepteurs est adapté pour déterminer la corrélation de l'un de la pluralité de signaux de porteuses filtrés avec les signaux de porteuses de référence locale et le code de portée de référence locale.

Electronic Data Processing System

Receiver Front End
- RF Front End
- Analog-To-Digital Converter

Baseband/IF Processing Module
Measurement Module
- Carrier Phase Measurement Module
- Code Phase Measurement Module

Aggregate CD & CR Estimator — 42

Navigation Positioning Estimator — 62

Data Storage Device — 154

Data Bus — 150

Electronic Data Processor — 152

19

Correction Wireless Device (e.g., Receiver) — 50

FIG. 1

FIG. 2B

FIG. 2A

FIG. 2

Wide-Band Analog Receiver

Rf Front End — 12

Analog to Digital Converter — 14

Digital Baseband Pass Filter (18) — 16

L1 / L2 / L5

19

10

17

L1 Samp / L2 Samp / L5 Samp

IN — First CD&CR Demodulator + Correlator Bank — CORR
CR — CD — 22

CR — First Local Signal Generator — CD
CR_CTRL — CD_CTRL — 24
23

To block 62

L1 Measurements (CR&CD Phase) — 101
25

IN — Second CD&CR Demodulator + Correlator Bank — CORR
CR — CD — 26

CR — Local Signal Generator — CD
CR_CTRL — CD_CTRL — 28
27

To block 62

L2 Measurements (CR&CD Phase) — 102
29

IN — Third CD&CR Demod + Correlator Bank — CORR
CR — CD — 30

CR — Third Local Signal Generator — CD
CR_CTRL — CD_CTRL — 32
31

To block 62

L5 Measurements (CR&CD Phase) — 105
33

Digital Receiver Portion (20)

11

FIG. 2A

FIG. 2B

EP 3 362 818 B1

FIG. 3A

FIG. 3B

FIG. 3

FIG. 3A

FIG. 3B

400

402

Down-convert Composite Received Signal

404

Convert Down-converted Composite Received Signal
to Digital Composite Received Signal

406

Generate Local Reference Carrier Signal and Local
Reference Code Signal

408

Generate Correlation Signals

410

Estimate Carrier Corrective Control Data and Code
Corrective Control Data

412

Scale Carrier Corrective Control Data and Code
Corrective Control Data

FIG. 4

500 ⌇

502 ⌇

```
Determine Carrier Tracking Error at Reference
                 Frequency
```

504 ⌇

```
Determine Code Tracking Error at Reference
                 Frequency
```

506 ⌇

```
Determine Carrier Corrective Control Data and Code
   Corrective Control Data at Reference Frequency
```

508 ⌇

```
Determine Carrier Corrective Control Data and Code
Corrective Control Data at Frequency of Each Carrier
                   Signal
```

## FIG. 5

600

System Dynamic Propagation

602 ── Determine the instantaneous transition matrix Φ

604 ── Determine the matrix Q (system noise dynamic matrix)

606 ── Use previous adaptive scale factor η to determine standard deviation and cross correlation

608 ── Update scale factor η for next epoch based on obtained cross correlation

610 ── Determine the state propagation

612 ── Determine instantaneous observation matrix H

614 ── Determine predicted discriminator error and innovation sequence

616 ── Calculate the weighted cross correlation D and sum of D as Ω

618 ── Determine the parameter vector β based on D and Ω

620 ── Rescale β within a desired range

622 ── Determine the scale factor μ and cross correlation update based on β / Directly use the previous scale factor μ

624 ── Determine μ for next epoch based on the cross correlation

626 ── Update the state

Measurement Update

FIG. 6

EP 3 362 818 B1

| | |
|---|---|
| FIG. 7A | FIG. 7B |
| FIG. 7C | FIG. 7D |

FIG. 7

FIG. 7A

EP 3 362 818 B1

FIG. 7B

EP 3 362 818 B1

FIG. 7C

EP 3 362 818 B1

FIG. 7D

700

707

Transpose

$\Phi^T_{t-1}$ bl

718

$\Phi_{t-1}$ bl

801

$X_{t-1}b(l+q)$

802

>>s

803

$Y_{t-1}b(2l+q-s)$

804

>>(2l-s)

Rho$_{t-1}$(+) bq

702

FIG. 8

FIG. 9

FIG. 10

EP 3 362 818 B1

FIG. 11

FIG. 12

**FIG. 13**

EP 3 362 818 B1